(19) Europäisches Patentamt
European Patent Office
Office européen des brevets

(11) EP 0 581 211 B1

(12) **EUROPÄISCHE PATENTSCHRIFT**

(45) Veröffentlichungstag und Bekanntmachung des Hinweises auf die Patenterteilung:
**28.02.1996 Patentblatt 1996/09**

(51) Int Cl.$^6$: **C08G 18/08**, C09D 175/14

(21) Anmeldenummer: **93111824.4**

(22) Anmeldetag: **23.07.1993**

# (54) Wässriges Überzugsmittel, Verfahren zu dessen Herstellung und dessen Verwendung bei Verfahren zur Mehrschichtlackierung

Aqueous coating, process for its preparation and its use in processes for multilayer coating

Composition de revêtement aqueux, procédé pour sa préparation et son utilisation pour la préparation d'un revêtement multicouche

(84) Benannte Vertragsstaaten:
**AT BE CH DE ES FR GB GR IT LI NL PT SE**

(30) Priorität: **25.07.1992 DE 4224617**

(43) Veröffentlichungstag der Anmeldung:
**02.02.1994 Patentblatt 1994/05**

(73) Patentinhaber: **Herberts Gesellschaft mit beschränkter Haftung**
**D-42285 Wuppertal (DE)**

(72) Erfinder:
- **Göbel, Armin**
  **D-44269 Wuppertal (DE)**
- **Patzschke, Hans-Peter, Dr.**
  **D-42279 Wuppertal (DE)**
- **Doebert, Jürgen**
  **D-45549 Wuppertal (DE)**

(74) Vertreter: **Türk, Gille, Hrabal, Leifert**
**Brucknerstrasse 20**
**D-40593 Düsseldorf (DE)**

(56) Entgegenhaltungen:
**EP-A- 0 379 158**
**EP-A- 0 458 243**
**EP-A- 0 480 251**
**DE-A- 2 310 128**
**DE-A- 3 805 629**
**DE-A- 4 127 680**
**GB-A- 2 218 426**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein wäßriges Überzugsmittel auf der Basis von Polyurethanharz enthaltenden Bindemitteln und deren Herstellung. Die Überzugsmittel sind geeignet zur Herstellung wetterfester Überzüge, insbesondere von Decklakken. Sie lassen sich beispielsweise für Mehrschichtlackierungen und insbesondere auf dem Kraftfahrzeugsektor einsetzen.

In der EP-A 0 089 497 wird die Verwendung einer mit Polyamin kettenverlängerten Polyurethandispersion zur Herstellung von Hydrobasecoats in Kombination mit einem Klarlack beschrieben. Durch Verwendung solcher Harze kann beispielsweise in der DE-A-26 28 124 oder in der DE-A-40 00 889 ein gutes Eigenschaftsniveau erreicht werden. Jedoch lassen die Lakkierungen noch Wünsche im Hinblick auf den Metalleffekt und die Wetterbeständigkeit (Schwitzkastentest) offen.

In der DE-A-39 15 459 und der EP-A-0 379 158 werden aus Kombinationen von Acrylatharzen und Polyurethandispersionen, die beim Eindispergieren in Wasser in unkontrollierter Weise kettenverlängert werden, wasserverdünnbare Basecoats hergestellt. Lösungspolymerisate ergeben dabei ungeeignete Lösemittelbeständigkeiten und Haftungen unter Reparaturbedingungen (30-60 min bei 80-90°C); Emulsionspolymerisate erreichen durch ihre Emulgatoren eine ungenügende Schwitzkastenbeständigkeit (Wetterbeständigkeit) besonders bei Trocknungsbedingungen unter niedrigen Temperaturen.

Aufgabe der Erfindung ist die Bereitstellung von wäßrigen Überzugsmitteln, die zu Überzügen mit guter Wetterbeständigkeit bei sonst guten optischen und mechanischen Eigenschaften führen.

Diese Aufgabe wird erfindungsgemäß durch wäßrige Überzugsmittel auf der Basis von Polyurethanharz enthaltenden Bindemitteln gelöst, die dadurch gekennzeichnet sind, daß sie als Bindemittel

I. 60 bis 100 Gew.-% eines Gemisches aus

A) 5-95 Gew.-% eines oder mehrerer selbstemulgierender Polyurethanharze in wäßriger Dispersion, mit einem Zahlenmittel der Molmasse (Mn) von 30000 bis 300000, erhältlich aus einem wasserdispergierbaren Polyurethanprepolymeren mit Carboxylgruppen entsprechend einer Säurezahl von 5 bis 50, und mit mehr als einer freien Isocyanatgruppe, bevorzugt mit mindestens 1,8 freien Isocyanatgruppen pro Molekül, durch Kettenverlängerung mit Wasser, und

B) 95 bis 5 Gew.-% eines oder mehrerer acrylierter Polyester und/oder acrylierter Polyurethane, mit einer Säurezahl von 5 bis 50, in wäßriger Dispersion, sowie

II. 0 bis 40 Gew.-% eines oder mehrerer vollverätherter Amin-Formaldehyd-Kondensationsharze und/oder Polyisocyanate,

enthalten, wobei sich die Gew.-% jeweils auf den Festkörper beziehen.

Bevorzugt wird erfindungsgemäß ein Bindemittelsystem eingesetzt aus

I. 95 - 70 Gew.-% eines Gemisches aus

A) 20 bis 60 Gew.-% mit Wasser kettenverlängerter hochmolekularer Polyurethandispersion und
B) 80 bis 40 Gew.-% acryliertem Polyester- und/oder acryliertem Polyurethanharz als Dispersion, sowie

II. 5 bis 30 Gew.-% wasserlöslichem und/oder nicht wasserlöslichem Amin-Formaldehydharz und/oder blockiertem Polyisocyanat.

Als Komponente A) wird eine selbstemulgierende Polyurethandispersion verwendet. Es können beispielsweise Polyurethandispersionen verwendet werden, die nach bekannten Verfahren hergestellt werden, wie z.B. in der DE-A-1 495 745 und von D. Dieterich und H. Reiff in Angew. Makrom. Chem., 26 (1972), 85 beschrieben. Die Polyurethandispersion ist bevorzugt anionisch und hat bevorzugt, bezogen auf ihren Festkörper, im nicht neutralisierten Zustand eine Säurezahl von 5 bis 50, besonders bevorzugt über 10 und unter 30, sowie eine Hydroxylzahl unter 30, bevorzugt unter 10 und besonders bevorzugt unter 2. Das selbstemulgierbare Urethanharz hat bevorzugt eine Glasübergangstemperatur, die

unter der Dispergiertemperatur liegt. Die durchschnittliche Teilchengröße liegt vorzugsweise bei etwa 0,001 bis etwa 1,0 µm. Die Dispersion kann z.B. nach dem folgenden Verfahren hergestellt werden: Zuerst wird ein Urethanprepolymer hergestellt, indem man

a) ein oder mehrere Polyisocyanate, bevorzugt Diisocyanate,

b1) ein Polyetherdiol oder Polyesterdiol oder eine Mischung derselben,
b2) gegenenfalls eine oder mehrere niedermolekulare Polyhydroxylverbindungen (Polyole) und

c) eine oder mehrere Dimethylolalkancarbonsäuren in einem NCO/OH- Äquivalentverhältnis von 1,1-2,0:1, bevorzugt von 1,1-1,9 : 1,

umsetzt. Die Herstellung kann beispielsweise in einer Ein- oder Mehrstufenreaktion lösemittelfrei oder bevorzugt in einem organischen, von aktivem Wasserstoff freien Lösungsmittel erfolgen.

Anschließend erfolgt beispielsweise in der organischen Phase eine Kettenverlängerung mit Wasser bei einer Reaktionstemperatur von beispielsweise 30 bis 95°C, bevorzugt über 45°C und unter 80°C, wobei pro NCO-Gruppe beispielsweise 0,5 bis 5 Mole bevorzugt über 0,7, besonders bevorzugt über 1 und unter 3, bevorzugt unter 2 Mole Wasser eingesetzt werden. Das so erhaltene Polymere kann nach oder während seiner Neutralisation mit einem Amin in weiterem Wasser emulgiert und das organische Lösemittel, falls erforderlich, abdestilliert werden.

Zur Herstellung des isocyanatgruppenhaltigen Urethanprepolymeren können beispielsweise Polyalkohole mit einer Hydroxylzahl von 10 bis 1800, bevorzugt 50 bis 500 mit überschüssigen Polyisocyanaten bei Temperaturen von beispielsweise bis zu 150°C, bevorzugt 50 bis 130°C lösemittelfrei oder in organischen Lösemitteln, die nicht mit Isocyanaten reagieren können, umgesetzt werden. Das Äquivalenzverhältnis von NCO zu OH-Gruppen liegt bei 1,1 bis 1,9 zu 1, bevorzugt bei 1,2 bis 1,4 zu 1. Die zur Herstellung des Prepolymeren eingesetzten Polyole können niedrigmolekular und/oder hochmolekular sein. Sie können auch reaktionsträge anionische Gruppe enthalten.

Niedrigmolekulare Polyole ergeben ein härteres Polyurethan als höhermolekulare Polyole. Niedrigmolekulare Polyole haben ein Molekulargewicht von 60 bis zu etwa 400 und können aliphatische, alicyclische oder aromatische Gruppen enthalten. Es werden dabei Mengen bis zu 30 Gew.-% der gesamten Polyol-Bestandteile, bevorzugt etwa 2 bis 20 Gew.-% eingesetzt. Vorteilhaft sind die niedermolekularen Polyole mit bis zu etwa 20 Kohlenstoffatomen je Molekül wie Ethylenglykol, Diethylenglykol, Triethylenglykol, 1,2-Propandiol, 1,3-Propandiol, 1,4-4 Butandiol, 1,2-Butylenglykol, 1,6-Hexandiol, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen. Es können auch Urethandiole eingesetzt werden, die durch Umsetzung von Alkylencarbonaten, wie Ethylen- oder Propylencarbonat, mit primären Aminoalkoholen, wie Aminoethanol oder Aminoisopropanol oder mit primären Diaminen, wie Ethylendiamin, Propylendiamin, 2-Methyl-pentandiamin-1,5 oder Hexandiamin-1,6 entstehen.

Zur Herstellung verzweigter Polyurethandispersionen können geringe Mengen Dialkohol gegen Trialkohole, wie Glycerin, Trimethylolethan oder Trimethylolpropan ausgetauscht werden. Es können jedoch auch niedermolekulare Reaktionsprodukte mit Alkylenoxiden eingesetzt werden.

Um ein NCO-Prepolymeres hoher Flexibilität zu erhalten, wird ein hoher Anteil eines oder mehrerer höhermolekularer, überwiegend linearen Polyole mit einer bevorzugten Hydroxylzahl von 30 bis 150 zugesetzt. Es handelt sich bevorzugt um Polyether und/oder Polyester. Bevorzugt bestehen bis zu 97 Gew.-% des gesamten Polyols aus gesättigten und ungesättigten Polyestern und/oder Polyethern mit einem Zahlenmittel der Molmasse Mn von 400 bis 5000.

Beispiele für hochmolekulare Polyole sind aliphatische Polyetherdiole der allgemeinen Formel

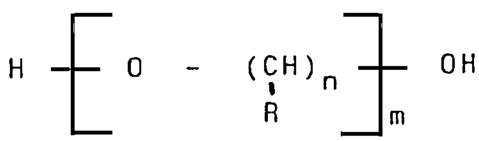

in der R = Wasserstoff oder ein niedriger, gegebenenfalls mit verschiedenen Substituenten versehener Alkylrest ist, wobei n = 2 bis 6, bevorzugt 3 bis 4 und m = 2 bis 100, bevorzugt 5 bis 50 ist. Beispiele sind lineare oder verzweigte Polyetherdiole wie Poly-(oxyethylen)glykole, Poly (oxypropylen)glykole und/oder Poly(oxybutylen)glykole. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im Molmassenbereich Mn von 400 bis 3000.

Die Herstellung von verwendbaren Polyesterpolyolen kann auf verschiedene Weise erfolgen, beispielsweise in der

Schmelze oder durch azeotrope Kondensation bei Temperaturen von z.B. 160 bis 260°C. Bevorzugt erfolgt die Herstellung aus Dicarbonsäure und Dialkoholen, die gegebenenfalls geringfügig durch kleine Mengen an Trialkoholen modifiziert sein können. Die Reaktion wird, gegebenenfalls unter Zusatz von Katalysatoren, wie Zinnoctoat oder Dibutylzinnoxid, solange durchgeführt, bis praktisch alle Carboxylgruppen (Säurezahl unter 1) umgesetzt sind. Die OH-Zahl beträgt bevorzugt 35 bis 200, besonders bevorzugt über 50 und unter 150; das Zahlenmittel der Molmasse liegt bevorzugt bei 500 bis 5000, besonders bevorzugt über 600 und unter 3000; sie werden durch den verwendeten Alkoholüberschuß festgelegt. Zur Bestimmung der theoretischen Molmasse genügt die Bestimmung der OH-Zahl unter Berücksichtigung der Funktionalität von 2 bei linearem Aufbau. Die zahlenmittlere Molmasse wird dann errechnet nach der Formel

$$\overline{Mn} = \frac{56100}{\text{OH-Zahl}} \times 2$$

Die bevorzugt eingesetzten Dicarbonsäuren, ihre Anhydride oder Methylester sind linear oder verzweigt aliphatisch, alicyclisch oder aromatisch aufgebaut. Die beiden Carboxylgruppen sind bevorzugt so angeordnet, daß sie kein innermolekulares Anhydrid bilden können, d.h. die beiden Carboxylgruppen sind z.B. durch eine Kohlenstoffkette mit 2 bis 14 C-Atomen, bevorzugt 4 bis 8, voneinander getrennt. Beispiele hierfür sind Adipinsäure, 2,2,4-Trimethyladipinsäure, Azelainsäure, Sebacinsäure, 1,3- und 1,4-Cyclohexandicarbonsäure, 1,4- oder 1,3-Di- oder Tetrahydrophthalsäure, Isophthalsäure, mit Alkylgruppen substituierte Isophthalsäuren und/oder Terephthalsäure.

Die Dialkanole sind ebenfalls linear oder verzweigt aliphatisch oder cyclisch aufgebaut. Ihre beiden OH-Gruppen werden ebenfalls z.B durch eine Kohlenstoffkette mit 2 bis 14, bevorzugt 4 bis 8 C-Atomen voneinander getrennt. Für besonders hydrolysebeständige Polyester werden Diole mit sterisch gehinderten primären OH-Gruppen oder mit sekundären Hydroxylgruppen verwendet. Beispiele für Dialkanole sind Butandiol-1,4, Hexandiol-1,6, Hexandiol-2,5, Cyclohexandiol-1,4, 2-Ethylhexandiol-1,3, 2,2,4-Trimethylpentandiol-1,3, Hydroxypivalinsäureneopentylglykolester, Cyclohexandimethanol, 2,2-Dimethyl-1,3-propandiol, 2-Ethyl-2-butyl-1,3-propandiol, 1,1-Isopropyliden-bis-(p-phenoxy) -1-ethanol, 2,2-Bis-(hydroxymethyl)-1-butanol, 1,3-Di-(hydroxyethyl)-5,5-dimethylhydantoin, sowie die hydrierten Bisphenole A oder F. Die Dialkohole können geringe Anteile an höherfunktionellen Polyolen, wie beispielsweise Glycerin oder Trimethylolpropan enthalten, um eine Verzweigung einzuführen. Die Menge sollte jedoch so klein sein, daß keine vernetzten Produkte entstehen. Es werden 0 bis 6 Gew.-%, bevorzugt 0,5 bis 4 Gew.-%, bezogen auf das Polyesterpolyol an niedrigmolekularen Triolen mit einer Molmasse von 60 bis 350 zugegeben. Es wird ein linearer aliphatischer Aufbau der Polyesterpolyole bevorzugt, der gegebenenfalls anteilweise eine aromatische Dicarbonsäure enthalten kann und am Molekülende bevorzugt eine OH-Gruppe enthält. Die Polyesterpolyole weisen im wesentlichen keine freien Carboxylgruppen auf und sind bevorzugt frei von olefinischen Doppelbindungen.

Als Polyesterpolyole können erfindungsgemäß auch Polyesterdiole eingesetzt werden, die durch Kondensation von Hydroxycarbonsäuren erhalten werden. Sie zeichnen sich durch die wiederkehrenden Polyesteranteile der Formel

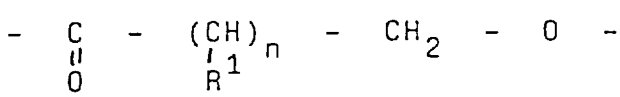

aus, wobei n = 3 bis 18, bevorzugt 4 bis 6 und der Substituent $R^1$ Wasserstoff, ein Alkyl-, Cycloalkyl- und/oder Alkoxyrest ist. Kein Substituent enthält mehr als 12 Kohlenstoffatome. Die Grundbausteine sind beispielsweise Hydroxycapronsäure, Hydroxybuttersäure, Hyxdoxydecansäure und/oder Hydroxystearinsäure. Als Ausgangsmaterial kann auch ein Lacton der folgenden allgemeinen Formel verwendet werden

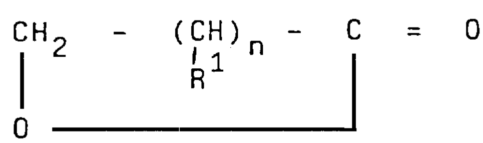

in der n und $R^1$ die vorstehend angegebene Bedeutung haben. Für die Herstellung von Polyesterdiolen sind unsubstituierte E-Caprolactone mit n = 4 und $R^1$ = H bevorzugt, die mit niedermolekularen Polyolen gestartet werden. Unter carboxygruppenfreien Polyesterdiolen werden auch OH-funktionelle Kohlensäureester verstanden, die beispielsweise durch Umsetzung von Kohlensäure-diethyl- und/oder -diphenylester mit Glykolen oder Dialkanolen, wie 1,6-Hexandiol hergestellt werden können.

Es können auch sequenzierte Polydiole aus Polyethern und Polyestern, bzw. normalen Carbonsäure- und Kohlensäureestern verwendet werden. Die Polycarbonate können durch seitenständige Gruppen hoher Polarisierbarkeit oder durch Einbau aromatischer oder cyclischer Monomerer beliebig modifiziert sein.

Polyurethane sind im allgemeinen nicht mit Wasser verträglich, wenn nicht bei ihrer Synthese spezielle Bestandteile eingebaut und/oder besondere Herstellungsschritte vorgenommen werden. So wird in die Komponente A) eine so große Säurezahl eingebaut, daß das neutralisierte Produkt stabil in Wasser zu emulgieren ist. Hierzu dienen Verbindungen, die zwei mit Isocyanatgruppen reagierende H-aktive Gruppen und mindestens eine zur Anionenbildung befähigte Gruppe enthalten. Geeignete mit Isocyanatgruppen reagierende H-aktive Gruppen sind insbesondere Hydroxylgruppen, sowie primäre und/oder sekundäre Aminogruppen. Beispiele für Gruppen, die zur Anionenbildung befähigt sind, sind Carboxyl-, Sulfonsäure und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den Hydroxylgruppen des Moleküls reagieren.

Zur Herstellung solcher Polyurethane werden bevorzugt Alkansäuren mit zwei mit Isocyanatgruppen reagierenden H-aktiven Gruppen verwendet, deren Carboxylgruppe sterisch so behindert ist, daß sie nicht mit Isocyanatgruppen zur Reaktion kommt. Beispiele hierfür sind Alkansäuren mit H-aktiven Gruppen, die am alpha-ständigen Kohlenstoffatom zur Carboxylgruppe einen sperrigen Substituenten oder zwei Substituenten aufweisen. Sperrige Substituenten könnten beispielsweise tert.-Alkylgruppen sein, wie die tert.-Butylgruppe. Andere Substituenten sind beispielsweise zwei Methylgruppen, zwei Ethylgruppen usw. Die H-aktiven Gruppen können beliebig über die Grundstruktur der Alkansäuren und/oder die Substituenten verteilt sein. Bevorzugt werden dazu Alkansäuren mit zwei Substituenten am $\alpha$-ständigen Kohlenstoffatom eingesetzt. Der Substituent kann eine Hydroxylgruppe, eine Alkylgruppe oder bevorzugt eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Beispiele für solche Verbindungen sind Dihydroxypropionsäure, Dihydroxybernsteinsäure, Dihydroxybenzoesäure und/oder Dihydroxy-Cyclohexanmonocarbonsäure. Eine besonders bevorzugte Gruppe von Dihydroxyalkansäuren sind die 2,2-Dialkylolalkansäuren, die durch die Strukturformel

$$\begin{array}{ccccc} & & R^3 & - & OH \\ & & | & & \\ R^2 & - & C & - & COOH \\ & & | & & \\ & & R^4 & - & OH \end{array}$$

gekennzeichnet sind, worin $R^2$ = Wasserstoff oder eine Alkylgruppe mit bis zu 20 Kohlenstoffatomen bedeutet; $R^3$ und $R^4$ unabhängig voneinander jeweils lineare oder verzweigte $C_1$- $C_6$-Alkylenketten, bevorzugt $-CH_2-$ sind. Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxyalkansäure ist 2,2-Dimethylolpropionsäure. Es wird soviel Dihydroxyalkansäure in das Gemisch als Diol gegeben, daß die Säurezahl des fertiggestellten Polyesterurethanharzes 5 bis 50, beispielsweise 10 bis 50, bevorzugt über 15 und unter 40 beträgt. Die untere Grenze liegt besonders bevorzugt bei 20, die obere Grenze besonders bevorzugt bei 30. Verwendbare Phosphorsäuregruppen enthaltende Verbindungen sind z.B. 2,2-Dimethylolpropan-Phosphonsäure oder Diethanolamid-methanphosphonsäure. Es werden soviele von diesen Anionengruppen bildenden Monomeren zugesetzt, daß die Säurezahl des Polyesterurethanharzes im gewünschten Bereich liegt.

Die Dimethylolalkancarbonsäure wird in einer Menge von etwa 0,5 bis etwa 5 Gew.-%, vorzugsweise etwa 1 bis 3 Gew.-% (berechnet als Carboxylgruppe), bezogen auf das durch Umsetzen der Komponenten (a) bis (c) hergestellte Urethanprepolymer, verwendet. Wenn die Carboxylgruppenmenge unter etwa 0,5 Gew.-% liegt, ist es schwierig, eine stabile Emulsion herzustellen. Wenn dagegen die Menge 5 Gew.-% übersteigt, verstärkt sich die hydrophile Eigenschaft, was die Emulsion hochviskos macht und die Wasserbeständigkeit der Beschichtung verringert.

Aminogruppenhaltige Verbindungen sind beispielsweise $\delta$-Diaminovaleriansäure, 3,4-Diaminobenzoesäure, 2,4-Diaminotoluolsulfonsäure und 2,4-Diamino-diphenylethersulfonsäure.

Als typische Polyisocyanate, insbesondere Diisocyanate werden beispielsweise lineare oder verzweigte aliphatische, cycloaliphatische und/oder aromatische Kohlenwasserstoffe mit einem Isocyanatgehalt von 20 bis 50 % verwendet. Sie enthalten als funktionelle Gruppen bevorzugt zwei Isocyanatgruppen, die im Molekül asymmetrisch oder symmetrisch angeordnet sind. Sie können aliphatisch, alicyclisch, arylaliphatisch oder aromatisch sein. Ihr Aufbau kann beispielsweise nach dem gewünschten Anwendungszweck des beispielsweise zu pigmentierenden Überzugsmittels gewählt werden. Beispielsweise kann man für den späteren Einsatz in Grundierungen oder Primern die Isomere oder Isomerengemische von organischen Diisocyanaten von Toluylendiisocyanat verwenden. Andere Beispiele sind 1,4-Bis (isocyanat)benzol, 2,4-Bis(isocyanat)-toluol, Bis-(isocyanat)isododecylbenzol, Bis-(2-isocyanat-phenyl)methan, 1,5-Bis-(isocyanat)naphthalin, 4,4'-Bis-(isocyanat)-3,3'-dimethylbiphenyl. Die Verwendung aromatischer Diisocyanate als Komponente (a) führt zur Neigung, die Beschichtung beim Aushärten zu vergilben und eine Verfärbung derselben bei Belichtung mit UV-Licht zu verursachen und ist daher unerwünscht. Für Decklacksysteme werden beispielsweise aufgrund ihrer guten Beständigkeit gegenüber ultraviolettem Licht bevorzugt Diisocyanate eingesetzt, bei denen die Isocyanatgruppe an ein nichtaromatisches, gegebenenfalls -substituiertes C-Atom gebunden ist. Beispiele für verwendbare aliphatische Diisocyanate sind solche der allgemeinen Formel

$$O=C=N-\left[CR^5_2\right]_m-N=C=O$$

worin m eine ganze Zahl von 2 bis 20, insbesondere 5 bis 8 ist und $R^5$, das gleich oder verschieden sein kann, Wasserstoff oder einen niedrigen Alkylrest mit 1 bis 8 C-Atomen, vorzugsweise eine Methylgruppe darstellt. Beispiele hierfür sind 1,6-Bis-(isocyanat)pentan, 1,6-Bis-(isocyanat)hexan, 1,6-Bis-(isocyanat)-2,2,4-trimethylhexan, 1,4-Bis-(isocyanat-ethyl)cyclohexan oder 1,3-Bis-(2-isocyanatmethyl)cyclohexan. Beispiele für geeignete cycloaliphatische Diisocyanate sind 1,4-Bis-(isocyanat)cyclohexan, Bis-(4-isocyanatcyclohexyl)methan, 5-Isocyanat-3-(isocyanatmethyl) -1,1,3-trimethylcyclohexan, Lysindiisocyanat, Tetramethylen-xylylendiisocyanat oder Menthandiisocyanat. Als arylaliphatische Diisocyanate können verwendet werden beispielsweise 1,3-Bis-(1-isocyanatmethyl)benzol oder 1,4-Bis-(1-isocyanat-1-methyl)-benzol. Besonders bevorzugt sind Polyesterurethanharze auf Basis von 5-Isocyanat-3-(isocyanatmethyl)-1,1,3-trimethylcyclohexan (= Isophorondiisocyanat) und/oder Bis-(4-isocyanat-cyclohexyl)methan (= Desmodur W®) als Gemisch verschiedener sterischer Konfiguration. Die Synthese erfolgt durch gemeinsame Reaktion der Reaktanten im Gemisch oder stufenweise zu einem sequentierten Aufbau. Sie können einen geringen Anteil Triisocyanate, wie beispielsweise Isocyanurate, Polyisocyanatester oder Reaktionsprodukte von Trimethylolpropan mit Diisocyanat enthalten. Polyole und Diisocyanate werden bevorzugt in wasserfreien inerten Lösemitteln, wie Ketonen, Estern oder Ethern, z.B. bei Temperturen von 40 bis 100°C umgesetzt. Beispiele hierfür sind Aceton, Methylethylketon, Methylisobutylketon, N-Methylpyrrolidon, Tetrahydrofuran, Dioxan, Diethylenglykol-dimethylether, Propylenglykol-dimethylether, Methoxyhexanon und/oder Methoxypropylacetat. Mit Hilfe des NCO/OH-Verhältnisses wird die Molmasse gesteuert und das Harz auf die gewünschte NCO-Zahl gebracht.

Danach wird z.B. in dem organischen Lösemittel mit Wasser umgesetzt zur Kettenverlängerung, so daß die NCO-Zahl praktisch 0 ist und bevorzugt eine Harzviskosität von 1 Pa.s bis 20 KPa.s, gemessen in dem eingesetzten Lösemittel, mit Hilfe eines Rotationsviskosimeters, erreicht wird. Beispielsweise kann hierzu mit einer Wassermenge von weniger als 1 Gew.-% Wasser, bezogen auf die gesamte Polymerisationsmasse, gearbeitet werden. Bevorzugt erfolgt die Umsetzung mit Wasser vor der Neutralisation, da hierdurch die Bildung von unerwünschtem Koagulat verhindert werden kann. Danach erfolgt die Herstellung einer wäßrigen Dispersion, insbesondere mit einem Festkörpergehalt von 20 bis 50 Gew.-%, durch weiteres Verdünnen mit Wasser, wobei während, vor oder nach der Wasserzugabe, Base, wie z.B. Ammoniak, Alkylamin oder ein Aminoalkohol zur Neutralisation der Carboxylgruppen zugesetzt wird. Der Neutralisationsgrad beträgt 0,5 bis 1,2 Äquivalente Amin pro Carboxylgruppe, bevorzugt 100 %. Als Amine werden primäre, sekundäre oder tertiäre Alkylamine oder Aminoalkohole verwendet, die Diethylamin, Triethylamin, N-Methylmorpholin, Dimethylaminoethanol, Diisopropanolamin und Aminoethanol usw. Das organische Lösemittel kann dann entfernt werden, z.B. durch geeignete Destillation, gegebenenfalls unter Vakuum, z.B. bei Temperaturen von 40 bis 90°C. Die entstehenden Dispersionen haben eine durchschnittliche Teilchengröße von 10 bis 1000 nm, bevorzugt 30 bis 500 nm.

Die Komponente B) der erfindungsgemäßen Überzugsmittel wird durch acrylierte Polyester und/oder acrylierte Polyurethane zu wäßriger Dispersion gebildet. Die entstehenden Dispersionen haben eine durchschnittliche Teilchengröße von 10 bis 1000 nm, bevorzugt 30 bis 500 nm.

Unter acrylierten Polyestern werden, wie z.B. in DE-A- 28 11 913, DE-A- 33 01 729 und DE-A- 35 44 337 beschrieben, Reaktionsprodukte verstanden, die durch radikalische Emulsionspolymerisation von copolymerisierbaren $\alpha,\beta$-ungesättigten Monomeren in Gegenwart von linearen oder verzweigten carboxyfunktionellen Polyestern, die gegebenenfalls noch Urethan- Amid-, Hydroxyl- und/oder Epoxy-Gruppen enthalten hergestellt werden können. Die Herstellung erfolgt beispielsweise unter Zusatz mindestens eines Polymerisationsinitiators bei Temperaturen von 0 bis 150°C, vorzugsweise über 20 und unter 100°C, besonders bevorzugt über 40 und unter 90°C gegebenenfalls unter Druck. Geeignete Polyester können z.B. in der Schmelze oder im azeotropen Kondensationsverfahren durch Umsetzung von Polycarbonsäuren und Polyalkoholen, gegebenenfalls unter Zusatz von gesättigten und ungesättigten Fettsauren (Ölen) und/oder Epoxidverbindungen bei Temperaturen von 150 bis 260°C erhalten werden. Sie haben eine solche Säurezahl, daß sie nach Neutralisieren in Wasser stabil dispergierbar sind.

Als Polycarbonsäuren werden lineare oder verzweigte aliphatische, cycloaliphatische und/oder aromatische mehrbasische Carbonsäuren, vorzugsweise Di-, Tri- und Tetracarbonsäuren mit. 4 bis 12 Kohlenstoffatomen pro Molekül oder deren veresterungsfähige Derivate wie beispielsweise Anhydride oder Methanolester verwendet. Außer den schon bei den Polyesterpolyolen, die zur Herstellung der Polyurethanharze der Komponete A) verwendet werden, erwähnten Dicarbonsäuren werden beispielsweise (Meth)acrylsäureaddukte an konjugiert oder isoliert ungesättigte Fettsäuren, Phthalsäureanhydrid, Tetrahydrophthalsäureanhydrid, Tricarbonsäuren, wie Trimellithsäureanhydrid oder Maleinsäure-Addukte an isoliert oder konjugiert ungesättigte Fettsäure oder Tetracarbonsäure wie Pyromellithsäuredianhydrid oder aus Trimellithsäureanhydrid und Dialkanolen hergestellte Bis-anhydride eingesetzt. Um Funktionalität und Härte einzustellen, enthalten die gegebenenfalls ölfreien Polyester vorteilhaft auch kleine Mengen an einbasischen Säuren

wie Benzoesäure, tert.-Butylbenzoesäure oder Abietinsäure. Es können jedoch auch hydroxylgruppenhaltige Carbonsäuren wie 5-Hydroxypentancarbonsäure oder ihr Lacton, Dimethylolpropionsäure, Salicylsäure, Weinsäure oder Cyclohexanol-monocarbonsäure eingeestert werden.

Als Polyalkohole werden bevorzugt lineare oder verzeigte aliphatische, cycloaliphatische und/oder araliphatische Alkohole mit 2 bis 6, vorzugsweise 2 bis 4 an nicht aromatische Kohlenstoffatome gebundene Hydroxylgruppen und 2 bis 4 Kohlenstoffatomen pro Molekül verwendet. Beispiele für solche Polyalkohole sind Glykole und Dialkanole wie sie schon für die Polyesterpolyole der Polyurethanharze der Komponente A) Verwendung finden. Um die Funktionalität zu steigern und Verzweigungen einzuführen, können drei- oder höherwertige Polyalkohole eingesetzt werden, wie Glycerin, Trimethylolpropan, Di- oder Trimethylolpropanether, Trimethylolethan, Pentaerythrit, Dipentaerythrit, 1.2.6-Hexantriol oder Trishydroxyethylisocyanurat. Die genannten Polyalkohole können in geringen Mengen durch einwertige Alkohole ersetzt werden. Die Auswahl der Alkoholkomponente richtet sich unter anderem nach dem gewünschten Gehalt an freien Hydroxylgruppen, nach der Menge eingesetzter Monocarbonsäure und der gewünschten Löslichkeit und Verdünnbarkeit. Die eingesetzten Polyester können gegebenenfalls mit Mono- oder Diisocyanaten teilweise urethanisiert sein.

Um die geeignete Wasserlöslichkeit zu erhalten, kann die Herstellung der Harze beim entsprechenden Kondensationsgrad abgebrochen werden oder es wird vorteilhafter ein höhermolekularer OH-gruppenhaltiger Polyester mit Säureanhydriden, bevorzugt cycloaliphatischen Säureanhydriden umgesetzt. Einen ähnlichen Effekt erzielt man durch Reaktion mit Bisanhydriden, Trimellithsäureanhydrid, Trimellithsäure-monoalkylester oder Maleinsäureanhydrid-Addukten an isoliert oder konjugiert ungesättigte Fettsäuren. Ein anderes vorteilhaftes Verfahren ist das Senken der Säurezahl eines stark sauren Polyester-Prekondensates durch mindestens teilweise Umsetzung mit epoxidgruppenhaltigen Verbindungen wie dem Glycidylester der Versaticsäure (Cardura $^R$ E-10), epoxidiertem Leinöl oder Sojaöl oder Polyglycidylethern. Bevorzugt verwendet wird als OH-Polymer ein Reaktionsprodukt mit einer mittleren Molmasse (Mn) von zweckmäßigerweise 2000 bis 100000 (Gelchromatographie gegen Polystyrol-Standard) und einer bevorzugten Säurezahl von 5 bis 150, bezogen auf Festharz aus

a) einem Polyester oder einem Copolymerisat mit einer Hydroxyl-Zahl von 20 bis 300, besonders über 40 und unter 200, speziell über 50 und unter 130, bezogen auf Festharz,

b) einem Trimellithsäure-Einheiten enthaltenden Polycarbonsäureanhydridgemisch mit einer Säurezahl von 10 bis 1000, bevorzugt über 100 und unter 800, das durch Umsetzung von Trimellithsäureanhydrid mit bevorzugt zweiwertigen Alkoholen hergestellt wird, und

c) epoxidierten Ölen mit Epoxy-Zahlen von 1 bis 50, bevorzugt über 2 und unter 25, speziell über 3 und unter 15,

wobei das Äquivalentverhältnis von Carboxylgruppen zu Epoxid-Gruppen 3:1 bis 1:3, vorzugsweise 1,25 : 1 bis 1 : 1,25 und das Festkörper-Verhältnis von Bisanhydrid (b) zu OH-Polymer (a) zwischen 50 : 50 und 10 : 90, bevorzugt 40 : 60 bis 15 : 85 beträgt.

Aus dem so hergestellten Polyester wird bevorzugt nach Neutralisation eine wäßrige Dispersion hergestellt, in der ein Gemisch ungesättigter Monomere polymerisiert wird. Zur Herstellung der wäßrigen Dispersion wird mit Wasser verdünnt, wobei während, nach oder bevorzugt vor der Wasserzugabe, Base, wie z.B. Ammoniak, Alkylamin oder ein Aminoalkohol zur Neutralisation der Carboxylgruppen zugesetzt wird. Der Neutralisationsgrad beträgt beispielsweise 0,5 bis 1,2 Äquivalente Amin pro Carboxylgruppe, bevorzugt 100 %. Als Amine werden primäre, sekundäre oder tertiäre Alkylamine oder Aminoalkohole verwendet, wie Diethylamin, Triethylamin, N-Methylmorpholin, Dimethylaminoethanol, Diisopropanolamin und Aminoethanol usw. Um die besten Bedingungen für die Emulsionspolymerisation zu erreichen, kann dem laufenden Polymerisationsansatz bevorzugt noch weiteres Wasser zugegeben werden.

Als $\alpha,\beta$-ungesättigte Monomere kommen praktisch alle radikalisch polymerisierbaren Monomeren in Frage, bevorzugt unter Berücksichtigung der üblichen Einschränkungen für Copolymerisationen, die durch das Q und e-Schema nach Alfrey und Price, bzw. die Copolymerisationsparameter vorgegeben sind. Die Auswahl der ungesättigten Monomeren, die keine weiteren reaktiven Gruppen enthalten, erfolgt nach den mechanischen Eigenschaften und der Verträglichkeit der Polymeren. Der Einsatz hydrophiler Monomerer ist für die Durchführung der Polymerisation möglich, aber generell nicht notwendig. Es werden beispielsweise Acrylsäurealkylester, Methacrylsäurealkylester alkylester und/oder Maleinsäure- oder Fumarsäure-dialkylester eingesetzt, wobei die Alkylreste aus 1 bis 20 Kohlenstoffatomen bestehen und in linearer oder verzweigter aliphatischer Kette und/oder als cycloaliphatischer und/oder (alkyl)aromatischer Rest angeordnet sind. Verwendbare "harte" Monomere mit hoher Glasübergangstemperatur als Homopolymeres sind beispielsweise die Isomeren vom Vinylaromaten-Typ wie Styrol, -Methylstyrol, Vinyltoluol, p-tert-Butylstyrol oder Methacrylsäureester mit kurzer aliphatischer Kette wie Methylmethacrylat, Ethylmethacrylat, aber auch Cyclohexylmethacrylat, Isobornylmethacrylat, Dihydrodicyclopentadienylmethacrylat, (Meth)acrylamid und/oder (Meth)acrylnitril. Verwendbare "weiche" Monomere sind dagegen Acrylsäureester mit einer langen Alkoholkette wie n-Butylacrylat, Isobutylacrylat, tert-Butylacrylat, 2-Ethylhexylacrylat und/oder Laurylacrylat. Es können auch ungesättigte Ether wie Ethoxyethylmethacrylat oder Tetrahydrofurfurylacrylat eingesetzt werden. Monomere vom Vinylester-Typ, vorzugsweise Vinylester verzweigter $C_5$- bis $C_{15}$-Monocarbonsäuren, besonders bevorzugt Vinylester der Versaticsäure, können bei Einhaltung geeigneter Reaktionsbedingungen anteilweise auch verwendet werden. Unter einpolymerisierbaren hydroxylgruppenhaltigen Monomeren werden beispielsweise solche verstanden, die außer einer ethylenisch ungesättigten Gruppe noch mindestens eine OH-Gruppe an einem linearen oder verzweigten aliphatischen, cycloaliphatischen $C_2$- bis $C_{20}$-Kohlenstoffgerüst enthalten. Besonders geeignet sind (Meth)acrylsäurehydroxyalkylester wie Hydroxyethylacrylat, 2-Hydroxypropylmethacrylat, Butandiol-1.4-monoacrylat, Propylenglykolmonoacrylat, 2.3-Dihydroxypropylmethacrylat, Polypropylenglykol-monoacrylat oder auch Fumarsäure-dihydroxyalkylester. Es können jedoch auch N-Hydroxyalkyl (meth)acrylamide oder N-Hydroxyalkyl-fumarsäuremono- oder diamide, wie N-Hydroxyethylacrylamid oder N-(2-Hydroxypropyl)methacrylamid eingesetzt werden. Besonders elastische Eigenschaften sind bei Einsatz eines Reaktionsproduktes von Hydroxyalkyl(meth)acrylat mit ε-Caprolacton zu erhalten.

In geringen Mengen können außerdem ethylenisch polyungesättigte Monomere mit mindestens 2 radikalisch polymerisierenden Doppelbindungen eingesetzt werden, wie beispielsweise Divinylbenzol, 1.6-Hexandiol-diacrylat oder das Reaktionsprodukt aus Diisocyanat und Hydroxyalkyl(meth)acrylaten.

Durch den Einbau von 0 bis 60 Gew.-%, bevorzugt über 0,5 und unter 40 Gew.-%, thermisch reaktiver Vinylmonomerer können zunächst in Wasser dispergierfähige Polymerisate hergestellt werden, die dann nach dem Aufbringen auf ein Substrat über eine entsprechende thermische Nachbehandlung in den vernetzten Zustand übergehen. Ungesättigte Monomere, die zur Vernetzung geeignete Gruppen aufweisen, sind solche mit

a) Epoxidgruppen wie beispielsweise Glycidyl(meth)acrylat bzw. Alkylglycidyl(meth)acrylat, Glycidyl- bzw. Alkylglycidyl(meth)acrylamid oder Allylglycidylether;

b) blockierten Isocyanatgruppen wie beispielsweise im mit Caprolactam oder Ketoxim blockierten Isocyanatoethyl (meth)acrylat, 1-(4-Isopropenyl-phenyl)-1-methylisocyanat oder (1-Alkenyl)isocyanat;

c) N-Alkoxyalkylamiden wie im Methoxy- oder Ethoxymethyl (meth)acrylamid, oder die entsprechenden Verbindungen anderer ethylenisch ungesättigeter Säuren wie Malein-Fumar-, Itacon- oder Crotonsäure; und/oder

d) Carboxylgruppen wie (Meth)acrylsäure, Maleinsäure, Fumarsäure oder ihre Halbester oder Halbamide.

Bei Verwendung von Glycidylmethacrylat und Methacrylsäure entsteht beispielsweise das entsprechende Glycidyl-dimethacrylat automatisch bei der Polymerisation` Bevorzugte Dispersionscopolymerisate können als Monomereneinheiten bis zu 100 Gew.-% Methylmethacrylat und/oder n-Butylacrylat, 0 bis 20 Gew.-% Hydroxyethylmethacrylat, 0 bis 20 Gew.-% Glycidylmethacrylat und 0 bis 20 Gew.-% (Meth)acrylsäure enthalten, wobei die Summe der Monomereneinheiten stets 100 ist. Besonders bevorzugt ist ein Mischungsverhältnis, das 15 bis 80 Gew.-% Methylmethacrylat, 15 bis 50 Gew.-% n-Butylacrylat, 0 bis 15 Gew.-% Glycidylmethacrylat und 0 bis 5 Gew.-% (Meth)acrylsäure als Monomereneinheiten enthält.

Die Herstellung der Dispersion erfolgt beispielsweise so, daß man den Polyester als 5 bis 65 Gew.-%iges wäßriges System vorlegt und dann die Vinylmonomeren unter Zusatz eines Polymerisationsinitiators und gegebenenfalls weiterer üblicher Zusätze wie Emulgatoren und/oder Schutzkolloiden und/oder Molekulargewichtsreglern polymerisiert. Bevorzugt werden 5 bis 95 Gew.-% des carboxylgruppenhaltigen und OH-gruppenhaltigen Polykondensates mit 95 bis 5 Gew.-% $\alpha,\beta$-ungesättigten Monomeren copolymerisiert, bezogen auf den Gesamtfeststoffgehalt des fertigen Harzes.

Bevorzugt werden mehr als 10, speziell mehr als 25 Gew.-% carboxyfunktionelles Polykondensat und bevorzugt weniger als 90, speziell weniger als 75 Gew.-% Monomere eingesetzt, wobei die Summe beider Bestandteile 100 Gew.-% beträgt. Die Polymerisation kann in der Weise durchgeführt werden, daß man das neutralisierte carboxyfunktionelle Polymere mit dem gesamten Wasser als wäßriges System zusammen mit einem Teil des Initiators vorlegt, auf die gewünschte Polymerisationstemperatur aufheizt und dann innerhalb von 30 bis 180 Minuten das Monomerengemisch mit dem Rest des Initiators langsam zugibt. Es ist jedoch auch möglich, jeweils einen Teil des Wassers mit dem carboxyfunktionellen Polymeren vorzulegen und aus dem verbleibenden Wasser, dem Rest des carboxylgruppenhaltigen Polymeren und den Vinylmonomeren eine Voremulsion herzustellen, die dann in die auf Polymerisationstemperatur vorgeheizte und mit einem Polymerisationsinitiator versehene Vorlage langsam zugegeben wird. Nach Zulaufende wird der gesamte Ansatz von für 1 bis 2 Stunden bei 60 bis 90°C, vorzugsweise bei 70 bis 85°C nachgerührt, wobei gegebenenfalls weiterer Initiator zugesetzt wird, um einen vollständigen Umsatz zu erzielen. Der Feststoffgehalt in den erhaltenen Polymerdispersionen beträgt im allgemeinen 5 bis 75 Gew.-%, vorzugsweise 10 bis 65 Gew.-%. Der Wert für die zahlenmittlere Molmasse Mn des erhaltenen Polymerisates beträgt im allgemeinen 10000 bis 5 Millionen, vorzugsweise 50000 bis 1 Million, bezogen auf Polystyrol-Standard, gemessen über Gelpermeationschromatographie.

Die radikalbildenden Initiatoren sind beispielsweise Percarbonate, Perester wie tert.-Butylperpivalat, tert.-Butylperoctoat, tert.-Butylperbenzoat, Peroxide wie Benzoylperoxid, o-Methoxybenzoylperoxid, Dichlorbenzylperoxid, Hydroperoxide wie tert.-Butylhydroxyperoxid oder Cumolhydroperoxid oder aliphatische Azoverbindungen wie Azodiisobuttersäure-nitril. Der Initiator kann wasserlöslich oder monomerlöslich sein. Bevorzugt sind z.B. Natrium-, Kalium-, Ammoniumperoxydisulfat, bzw. Natrium-, Kalium-, Ammoniumperoxydisulfat-Redoxsysteme mit Natrium-, Kalium-, Ammoniumsulfiden, -sulfiten oder anderen Reduktionsmitteln. Die Menge des Polymersiationsinitiators beträgt im allgemeinen 0,01 bis 10 Gew.-%, vorzugsweise 0,02 bis 5, insbesondere 0,05 bis 3 Gew.-%, bezogen auf die Gesamtmenge der Vinylmonomeren. Durch den Einsatz von Molekulargewichtsreglern wie Mercaptanen, halogenhaltigen Verbindungen und anderen radikalübertragenden Substanzen kann die Molmasse der Polymerisate in bekannter Weise herabgesetzt werden. Bevorzugt sind Butylmercaptan, Dodecylmercaptan, Tetrakismercaptoacetylpentaerythrit, tert.-Butyl-o-thiokresol, Chloroform, Bromoform, Trichlorethylen, Trichlorbrommethan, Tetrachlorkohlenstoff, Toluol, dimersisiertes α-Methylstyrol und/oder 3-Oxa-tetrahydrofuran. Für die Herstellung eines guten wasserverdünnbaren Metallic-Basecoats werden Gemische aus 95 bis 10 Gew.-% acryliertem Polyester mit 5 bis 90 Gew.-% harnstoffgruppenhaltiger Polyurethandispersion verwendet.

Als Komponente B) können in den erfindungsgemäßen wäßrigen Überzugsmitteln statt oder neben den acrylierten Polyestern auch wasserverdünnbare, hochmolekulare, emulsionsartige acrylierte Polyurethane eingesetzt werden. Unter acrylierten Polyurethanen werden z.B. Reaktionsprodukte verstanden, die durch radikalische Lösungs-, Emulsions- oder Suspensionspolymerisation von copolymerisierbaren α,β-ungesättigten Monomeren in Gegenwart von gegebenenfalls ungesättigten Polyurethanharzen hergestellt werden, wie z.B. in der DE-A-4 122 265 und der DE-A-4 122 266 beschrieben. Die Herstellung einer stabilen Dispersion ist abhängig von der Säurezahl der Polyurethandispersion ($SZ_{(PU)}$) und dem Anteil der Monomeren nach der Formel

$$SZ_{(PU)} = \frac{SZ_{(Endprodukt)} \times 100}{100 - \%\ Monomer}$$

Die Säurezahl der acrylierten Polyurethandispersion ($SZ_{(Endprodukt)}$) liegt bevorzugt zwischen 12 und 40. Die gegebenenfalls vorhandene Hydroxylzahl wird durch Hydroxylgruppen enthaltende ungesättigte Monomere eingebracht. Sie beträgt bevorzugt 5 bis 100. Die untere Grenze liegt vorteilhaft bei 20, die obere bei 80. Zur Herstellung des acrylierten Polyurethanharzes werden 95 bis 5 Gew.-% Polyurethanharz mit 5 bis 95 Gew.-% ungesättigter Monomere verwendet. Bevorzugt wird eine Menge von weniger als 60 Gew.-%, besonders bevorzugt von weniger als 50 Gew.-% Polyurethanharz und mindestens eine Menge von 20 Gew.-%, vorteilhaft von mindestens 30 Gew.-% Polyurethanharz eingesetzt, bezogen auf Gesamtfestharz. Die wäßrigen Polyurethandispersionen können, wie vorstehend für die Komponente A) beschrieben, aus den dort genannten Rohstoffen erfolgen. Falls eine Kettenverlängerung gewünscht wird, kann diese wie vorstehend beschrieben, oder in geläufiger Weise mit Polyaminen erfolgen. Es wird im allgemeinen ohne Zusatz von Emulgatoren gearbeitet. Die Polymerisation der Monomeren erfolgt in der gleichen Weise wie die schon beschriebene Herstellung acrylierter Polyester. Der wesentliche Unterschied liegt in der Verwendung einer carboxylgrupenhaltigen Polyurethandispersion anstelle des carboxylgruppenhaltigen Polyesters für die Pfropfpolymerisation. Um eine Pfropfung zu unterstützen, können die verwendeten Dispersionen im Polyurethanharz noch ungesättigte Gruppen enthalten und zwar über den Einbau von ungesättigten Carbonsäuren, wie Malein-, Fumarsäure oder ungesättigten Fettsäuren in den Polyester oder über ungesättigte Monomere, wie Hydroxyalkyl(meth)acrylate, die höherwertigen Polyisocyanate zu Diisocyanaten defunktionalisieren. Als ungesättigte Monomere werden bevorzugt Mischungen von 16 bis 100 Gew.-%, vorteilhaft 20 bis 90 Gew.-%, insbesondere 35 bis 85 Gew.-% ethylenisch ungesättigter Monomere, die außer der ungesättigten Bindung keine weiteren reaktiven Gruppen tragen und 0 bis 65 Gew.-%, vorteilhaft 10 bis 60 Gew.-%, insbesondere 15 bis 50 Gew.-% einpolymerisierbarer, hydroxylgruppenhaltiger Monomere und 0 bis 7 Gew.-%, vorteilhaft ohne polyungesättigte Monomere verwendet. Beispiele für einsetzbare Monomere wurden schon bei der Beschreibung der acrylierten Polyester angegeben.

Zur Herstellung der wäßrigen Dispersion können die radikalisch polymerisierbaren, ethylenisch ungesättigten Monomere der erwärmten wäßrigen Dispersion des Polyurethanharzes langsam zugesetzt werden. Dabei ist es möglich, sowohl die gesamte Menge des Monomeren auf einmal zuzugeben, als auch nur ein Teil vorzulegen und den Rest im Verlauf der Reaktion nachzudosieren. Die Monomeren können jedoch auch bevorzugt mit Hilfe eines Teils der Polyurethandispersion mit Wasser in eine Voremulsion gebracht werden, die dann langsam der vorgelegten restlichen Polyurethandispersion zugegeben wird. Als radikalische Initiatoren dienen bevorzugt wasserunlösliche organische Initiatoren, die entweder der Vorlage zugesetzt oder mit den Monomeren zugetropft werden. Sie können jedoch auch in unterschiedlicher Konzentration anteilweise der Vorlage zugegeben werden, die ein Teil der Monomeren enthält. Der Rest der Initiatoren wird mit den restlichen Monomeren zudosiert. Die radikalische Initiierung erfolgt durch thermische Zersetzung von organischen Peroxiden wie tert.-Butylperoctoat oder mit Azo-Verbindungen wie Azo-bis-isobutyronitril. Die Reaktionstemperatur ergibt sich aus der Zerfallsgeschwindigkeit des Initiators und kann gegebenenfalls durch geeignete Redoxsysteme gesenkt werden. Die Polymerisation erfolgt im allgemeinen bei einer Temperatur von 30 bis 100°C, insbesondere bei 60 bis 95°C. Die Temperatur kann auf 130°C gesteigert werden, wenn man unter Druck bis zu etwa 10 bar arbeitet.

Die erfindungsgemäßen wäßrigen Überzugsmittel können zur Komplettierung der Bindemittel die Komponente II. (auch als Komponenete C) bezeichnet) enthalten. Es handelt sich um ein oder mehrere Formaldehyd-Kondensationsharze und/oder blokkierte Polyisocyanate. Als Formaldehyd-Kondensationsharze können beispielsweise dem Fachmann geläufige Amin-Formaldehyd- und Phenol-Formaldehyd-Kondensationsharze, wie vollveretherte Amin- und Phenol-Formaldehydharze, verwendet werden. Die Komponente II. dient als Härter, oder insbesondere im Falle der Amin-Formaldehyd-Kondensationsharze auch zur Verbesserung der anwendungstechnischen Eigenschaften.

Als Amin-Formaldehyd-Kondensationsharze können dem Fachmann geläufige Harze Verwendung finden. Sie entstehen beispielsweise durch Reaktion von Aldehyden mit Harnstoff, N-Alkylharnstoff, Glykoluril, Dicyandiamid, verschiedenen Triazinen wie Melamin, Benzoguanamin oder Acetoguanamin oder ihren Mischungen und anschließend bevorzugt vollständige Veretherung mit niedrigmolekularen Monoalkoholen. Je nach Reaktionsbedingungen (pH-Wert, Temperatur) und Methylolierungsgrad werden Harze mit verschiedenen Molmassen und unterschiedlicher Reaktivität erhalten. Als Aldehyde werden vorzusweise Formaldehyd in wäßriger und/oder alkoholischer Form als Halbacetat verwendet. Paraformaldehyd wird praktisch in Gegenwart verdünnter Säuren oder Basen in warmen Wasser oder Alkoholen hydrolisiert bzw. depolymerisiert. Es ist jedoch der Einsatz anderer Aldehyde wie Glyoxal, Acetaldehyd, Isobutyroaldehyd oder Furfural möglich. Im allgemeinen wird die Methylolierung bevorzugt mit Formaldehyd unter Zusatz schwacher Basen durchgeführt. Es werden vorteilhaft 3 bis 6 Methylolgruppen pro Molekül Melamin umgesetzt.

Die Methylolgruppen der Aldehyd-Kondensationsprodukte werden bevorzugt vollständig mit Monoalkoholen unter saurer Katalyse umgesetzt. Besonders bevorzugt werden Methanol, Ethanol, Propanol, Butanol, Heptanol, Benzylalkohol, cyclische Alkohole sowie Ethoxyethanol oder Butoxyethanol.

Sollen Alkohole mit mehr als 4 Kohlenstoffatomen eingebaut werden, so wird die Methylolgruppe erst mit einem niedrigen Alkohol verethert und anschließend der höhere Alkohol durch Umetherung eingeführt. Die bevorzugten Alkohole sind Methanol und Butanol und seine Isomeren. Besonders bevorzugt sind Melaminharze, die mit 3 bis 6 Molen Formaldehyd umgesetzt und anschließend vollständig mit Methanol oder Methanol und n- oder iso-Butanol verethert sind. Die Harze werden nach dem Stand der Technik hergestellt und von vielen Firmen als Verkaufsprodukte angeboten. Bei Veretherung mit Hydroxycarbonsäuren bonsäuren wie Hydroxybenzoesäure, Salicylsäure oder Dimethylolpropionsäure entstehen carboxylgruppenhaltige, bei Verwendung von Hydroxy-alkyl(meth)acrylaten oder Allylalkohol ungesättigte Melaminharze. Es können auch carbamylmethylierte Melaminharze eingesetzt werden, die durch Reaktion von alkoxymethylierten Melaminharzen mit Alkylcarbamaten unter schwach sauren Bedingungen hergestellt werden.

Die bevorzugt eingesetzten Melamin- oder Benzoguanaminharze können je nach chemischem Aufbau hydrophob oder hydrophil sein, ein hydrophober Aufbau wird bevorzugt. Er wird durch das Zahlenmittel der Molmasse von etwa 600 bis 4000, bevorzugt über 1000 und unter 3000 und durch die Verdünnbarkeit in Lösemitteln (benzinverträgliche) festgelegt.

Bei den Polyisocyanaten für die Komponente II. handelt es sich bevorzugt um blockierte Polyisocyanate. Die blokkierten Polyisocyanate können aus den vorher für die Komponenten A) und B) beschriebenen Diisocyanaten hergestellt werden, die vorteilhafter Weise durch Reaktion mit Wasser, Trimethylolpropan oder durch Trimerisierung höherfunktionalisiert werden.

Polyisocyanatester entstehen beispielsweise durch Reaktion von silylierten Polyalkoholen, wie Pentaerythrit, mit Isocyanatcarbonsäurechloriden.

Die freien Isocyanatgruppen der Komponente II werden gemeinsam oder einzeln verkappt (blockiert), damit sie bei Raumtemperatur gegen Reaktionen mit Wasser oder den aktiven Wasserstoffatomen des Basisharzes (Hydroxyl-Gruppen) geschützt sind. Als Blockierungsmittel geeignet sind monofunktionelle, aciden Wasserstoff enthaltende Verbindungen mit nur einer einzigen Amin-, Amid-, Imid-, Lactam-, Thio- oder Hydroxylgruppe. Im allgemeinen werden flüchtige, aktiven Wasserstoff enthaltende Verbindungen mit niedrigen Molmassen, vorzugsweise von nicht mehr als 300, mehr bevorzugt von nicht mehr als 200, verwendet. Sie werden zweckmäßig bei Temperaturen über 50°C, vorzugsweise zwischen 80 und 120°C mit den Isocyanatgruppen umgesetzt. Das Blockierungsmittel wird in solchen Mengen eingesetzt, daß auf ein NCO-Äquivalent ein Äquivalent Blockierungsmittel kommt, wobei gegebenenfalls übliche Katalysatoren wie basische Katalysatoren, beispielsweise tertiäre Amine oder geringe Mengen an Metallsalzen, wie Zinn-(II)-octoat oder Dibutylzinndilaurat mitverwendet werden können. Geeignete Blockierungsmittel sind beispielsweise sekundäre oder tertiäre, aliphatische oder cycloaliphatische Alkohole, wie Isopropanol, tert.-Butanol, 2-Ethylhexanol, Furfurol, Cyclohexanol oder Hydroxyalkylester, Dialkylaminoalkohole wie Dimethylaminoethanol, Oxime wie Formaldehydoxim, Acetaldehydoxim, Methylethylketonoxim, Cyclohexanoxim, Trimethylcyclohexanonoxim, 2.2.6.6-Tetramethyl-piperidon-(4)-oxim, Acetophenonoxim, Benzophenonoxim oder Diethylglyoxim, Lactame, wie ε-Caprolactam, δ-Valerolactam, γ-Butyrolactam, Pyrroldion-2, Hydroxamsäuren, wie Acethydroxamsäure, Benzhydroxamsäure bzw. deren Ester, Phenole, wie Phenol, Kresol, tert.-Butylphenol, Dimethylaminophenol, N-Alkylamide, wie Methyl-acetamid, Imidazole, wie 2-Methylimidazol, Imide wie Phthalimid oder N-Hydroxymaleinimid, sowie enolisierende Verbindungen wie Malonsäureester, Acetessigsäureester oder NH-funktionelle Enamine.

Es sind aber auch β-Hydroxyglykole oder -glykolether und Glykolamide geeignet. Oxime und Lactone sind als Verkappungsmittel von besonderem Interesse, weil die damit verkappten Polyisocyanate bei relativ geringen Temperaturen

reagieren. Zur Blockierung können auch mehr als eine Art von Schutzgruppe, bevorzugt solche mit unterschiedlicher Reaktivität, verwendet werden. Es ist so beispielsweise möglich, ein Gemisch von zwei oder mehreren unterschiedlich blockierten Polyisocyanaten zu verwenden oder ein Polyisocyanat einzusetzen, das mit zwei oder mehreren unterschiedlichen Schutzgruppen blockiert ist.

Besonders bevorzugte Blockierungsmittel sind beim erfindungsgemäßen Verfahren Verbindungen der Formel

$$X - H,$$

in welcher X für

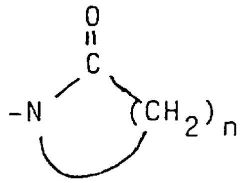

n = 3 - 7

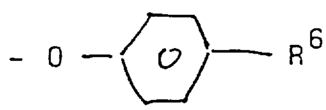

$R_6$:-H,-$CH_3$,-$C_9H_{19}$

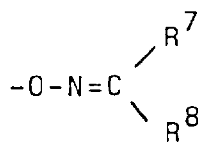

$R^7$:-H, -$C_nH_{2n}$ +1 (n=2 -5) $R^8 = R^7$, wobei $R^8$ und $R^7$ gleich oder verschieden sind.

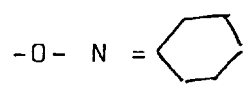

Bevorzugte Beispiele sind ε-Caprolactam und Methyl-ethylketoxim.

Zur Durchführung der Blockierungsreaktion wird im allgemeinen die Isocyanatkomponente vorgelegt und der Reaktionspartner zugegeben. Die Reaktion kann in Substanz oder auch in Gegenwart geeigneter (inerter) Lösemittel durchgeführt werden.

Die Vernetzung der wasserverdünnbaren Basisharze mit blockierten Polyisocyanaten kann gegebenenfalls durch Zusatz von 0.01 bis 2 Gew.-%, speziell 0.5 bis 1 Gew.-%, bezogen auf Festharz an Katalysatoren, wie stark basischer tertiärer Amine, wie Triethylendiamin und/oder aktiver Metallverbindungen beschleunigt werden. Eine besondere, manchmal synergistische Wirkung wird erreicht durch die Kombination von basischem Medium der abgeschiedenen Harze und den Metallsalzen von Wismut, Blei, Kobalt, Eisen, Antimon, Quecksilber, Calcium, Zink und Zinn und/oder Zinn-II und Zinn-IV-Verbindungen. Besonders bevorzugt werden Katalysatoren wie Eisen-III-acetylacetonat, Zinkacetylacetonat, Dibutylzinn-dilaurat, Di-n-butyl-zinnoxid, Dibutyl-zinn-dioctyl-maleat, Zinnoctoat, Zinn-oleat, Tetrabutyltitanat und/oder Cobalt-2-ethylhexanoat. Bevorzugt sind Katalysatoren, die im wäßrigen Bad in besonders fein verteilter Form vorliegen und im Film ohne zu keinen Verlaufsstörungen führen.

In den erfindungsgemäßen Überzugsmitteln wirken je nach Reaktionsfähigkeit oder Reaktionstemperatur die Melaminharze bzw. blockierten Polyisocyanate als Vernetzer oder als Weichmacher. Bevorzugt werden hydrophobe Melaminharze, die gegebenenfalls mit blockierten Polyisocyanaten gemischt sind.

Die erfindungsgemäße wäßrige Beschichtungszusammensetzung enthält die Komponenten I) bis II) bevorzugt in den folgenden Verhältnissen, bezogen jeweils auf das Harz-Festkörpergewicht.

Das Verhältnis der Mischung aus den Komponenten A) und B) / Komponente II. liegt bei der Aufbringung der wäßrigen Beschichtungszusammensetzung auf Metallsubstrate vorzugsweise zwischen 95 / 5 und 60 / 40, insbesondere zwischen 90 / 10 und 65 / 35, und bei der Aufbringung auf Kunststoffsubstrate vorzugsweise zwischen 90 / 10 und 20 / 80, insbesondere zwischen 80 / 20 und 30 / 70.

Der Festkörpergehalt und die Viskosität können direkt vor der Anwendung auf die jeweiligen Applikationsbedingungen abgestimmt werden.

Der Wasseranteil der erfindungsgemäßen Überzugsmittel hängt. von der jeweiligen Vertriebs- und/oder Applikationsform ab. Er beträgt beispielsweise 40 bis 85 Gew.-% oder mehr, jeweils bezogen auf das gesamte Bindemittel. Der Wasseranteil kann bei der Auslieferung beispielsweise 50 Gew.-% betragen und vor der Applikation auf den für die

Verarbeitung gewünschten Wert erhöht werden. Der Festkörper, oder Einbrennrückstand, ist von der Anwendung abhängig. Er beträgt bei Metallic-Base-Coats beispielsweise etwa 15 bis 25 Gew.-%, bei Uni-Base-Coats beispielsweise etwa 20 bis 50 Gew.-%.

Zur Verbesserung der Rheologie können die erfindungsgemäßen Überzugsmittel 1 bis 20 Gew.-%, bevorzugt 8 bis 15 Gew.-%, jeweils bezogen auf das gesamte Überzugsmittel eines oder mehrerer Lösemittel, enthalten. Als Lösemittel kommen organische Lösemittel in Frage, wie sie beispielsweise auf dem Lacksektor als Lacklösemittel und/oder Zusätze zu wäßrigen Überzugsmittel üblich sind. Geeignet sind beispielsweise aliphatische oder aromatische Lösungsmittel, wie Benzin oder Xylol, Ester, wie Butylacetat, Ether, wie Ethylenglykolmonobutylether (Butylglykol) oder Propylenglykolmonoethylether und Alkohole, wie n-Butanol.

Die erfindungsgemäßen Überzugsmittel enthalten Neutralisationsmittel zur teilweisen oder vollständigen Neutralisation von neutralisierbaren Gruppen. Der Neutralisationsgrad neutralisierbarer Gruppen beträgt bevorzugt 40 bis 120 % der neutralisierbaren Gruppen und liegt bevorzugt unter 100 %. Als Neutralisationsmittel für saure Gruppen kommen auf dem Lacksektor übliche Basen in Frage, wie die vorstehend angegebenenen Amine, Ammoniak oder Alkanolamine, wie N,N-Di-methylethanolamin.

Die Bindemittel sind besonders für die Herstellung von Überzugsmitteln für die farbgebenden Basisschichten geeignet. Es ist jedoch auch möglich andere Überzugsmittel, z.B. Grundierungen, Füller oder Steinschlagschutzschichten daraus herzustellen. Dabei wird die Auswahl der Pigmente und Additive und ihre Konzentration dem jeweiligen Verwendungszweck angepaßt.

Die erfindungsgemäßen wäßrigen Überzugsmittel können metallische und/oder färbende Pigmente enthalten, wie sie für Beschichtungszusammensetzungen üblich sind. Geeignete Effektpigmente sind z.B. Aluminiumpigmente, Interferenzpigmente (verschiedene Metalloxide oder Kombinationen davon auf Glimmer), organisch belegte Interferenzpigmente, Graphitplättchen, Phthalocyaninplättchen, Eisenoxidplättchen, mit Eisenoxid belegte Aluminiumpigmente, Molybdänsulfidplättchen, Edelstahlplättchen und Glasflakes. Geeignete färbende Pigmente sind übliche organische oder anorganische, transparante oder deckende Pigmente.

Sowohl deckende, wie auch transparente Pigmente und/oder Farbstoffe können in dem Basisbindemittel (Komponente I und/oder II) in einem geeigneten Pastenharz, wie z.B. in EP-A-0 438 090 beschrieben, oder z.B. einem Melaminharz angerieben oder eingearbeitet werden, um farbige Metalleffekte oder Unifarbtöne zu erhalten. Dabei kann in üblicher Weise vorgegangen werden. Als Farbmittel zur Herstellung von Farb- oder Tönpasten können z.B. solche Pigmente eingesetzt werden, wie sie in der deutschen Norm DIN 55 944 beschrieben sind. Hierfür eignen sich anorganische Pigmente, wie beispielsweise Titandioxid, Ruß, Eisenoxide, Chromoxide, Bleichromat und/oder organische Pigmente, wie beispielsweise Phthalocyanine, Chinakridone, Perylene, Indanthrene oder Isoindoline und/oder halogenierte Thioindigopigmente, sowie Füllstoffe, wie Kieselsäure, Bariumsulfat, Talkum oder Schichtsilikate. Als Dispergieraggregate eignen sich Rührscheibengeräte, Dreiwalzenstühle, Kugelmühlen und bevorzugt Sand- oder Perlmühlen. Die optimale Mahlgut Zusammensetzung ergibt sich aus der geeigneten Kombination der Hauptbestandteile des Mahlgutes - Pigment, Bindemittel und Lösemittel (Wasser) - und muß für jedes Dispergieraggregat gesondert bestimmt werden. Es ist die Aufgabe des Dispergierprozesses, Pigmentagglomerate soweit wie möglich wieder in Einzelteile zu zerlegen, um ihre volle Wirksamkeit in optischer Hinsicht entfalten zu können. Dabei muß mindestens soviel Bindemittel im Mahlgut vorhanden sein, wie zur vollständigen Benetzung des Pigmentes ausreichen. Im allgemeinen ist es günstig, so konzentriert wie möglich zu arbeiten, um so wenig Pastenharz wie möglich in eine spätere Lackrezeptur einzuschleppen. Der in Betracht kommende Viskositätsbereich wird so festgelegt, daß das Material verarbeitbar ist und in möglichst kurzer Zeit eine vollständige Dispergierung erreicht wird. Die optimale Hahlgutzusammensetzung wird auf das jeweilige Pigment abgestimmt. Die Pigmentpasten zeigen im allgemeinen eine strukturviskose Rheologie. Das Mahlgut kann vor oder nach dem Anreiben zusätzlich mit weiteren Anteilen an wäßriger Bindemitteldispersion verdünnt werden, um Tönarbeiten zu erleichtern.

Dem Mahlgut können übliche Hilfsmittel, wie Antischaummittel und Dispergierhilfsmittel zugesetzt werden. Um die Oberfläche der Pigmente einwandfrei zu benetzen, kann es günstig, aber nicht notwendig sein, dem Mahlgut zusätzlich Dispergierhilfsmittel (Netzmittel) zuzusetzen, die von der Oberfläche der Pigmente adsorbiert werden und durch Herabsetzen der Grenzflächenspannung zwischen Pigment und Bindemittel den Benetzungsvorgang unterstützen. Als Netzmittel sind beispielsweise für diesen Zweck übliche geeignet. Metallische oder nichtmetallische Effektpigmente, wie Aluminium-Bronzen, Perlglanz- oder Interferenz-Pigmente werden im allgemeinen in einem getrennten Arbeitsgang benetzt und dann in die angeriebene farbgebende, transparente Pigmentpaste ohne große Scherbeanspruchung eingerührt.

Die erfindungsgemäßen Überzugsmittel enthalten gegebenenfalls übliche Additive und Hilfsstoffe, wie sie auf dem Lacksektor eingesetzt werden. Derartige Hilfsmittel und Additive sind Verdicker, die Rheologie beeinflussende Zusätze, Antischaummittel, Korrosionsinhibitoren (beispielsweise zur Inhibierung der Gasung von Metallpigmenten: Al-Gasung). Die Additive und Hilfsstoffe werden in üblichen, dem Fachmann geläufigen Mengen, je nach gewünschtem Effekt zugesetzt.

Zur Herstellung werden die Komponenten der Überzugsmittel in den gewünschten Mengenanteilen miteinander

vermischt.

Die erfindungsgemäßen Überzugsmittel können auf verschiedene Substrate nach üblichen Beschichtungsverfahren aufgebracht werden, beispielsweise durch Spritzen, Streichen oder Rakeln. Als Substrate kommen verschiedene Materialien in Frage, wie Metalle, Kunststoffe, jedoch auch Holz, Glas und andere Substrate. Die erfindungsgemäßen Überzugsmittel sind besonders geeignet zur Herstellung von Uni-Beschichtungen und Metallic- oder anderen Effekt-Beschichtungen. Sie sind besonders als wäßrige Basecoats geeignet.

Die erfindungsgemäßen Überzugsmittel können, wie vorstehend erwähnt, auf verschiedensten Substraten angewendet werden. Sie eignen sich besonders zur Herstellung von Basisschichten in Mehrschicht-Lackaufbauten. Hier kommt als bevorzugtes Anwendungsgebiet die Lackierung von Kraftfahrzeugen bzw. Kraftfahrzeugteilen in Frage. Bevorzugt handelt es sich bei den erfindungsgemäßen Überzugsmitteln um selbsttrocknende Systeme, die außer zur Serienlackierung auch zur Reparaturlackierung, insbesondere von Kraftfahrzeugen und deren Teilen verwendet werden können.

Die Erfindung betrifft auch ein Verfahren zur Herstellung eines Mehrschichtüberzuges, bei dem beispielsweise auf ein Substrat gegebenenfalls als erste Schicht eine beliebige Grundierung oder eine Haftungsschicht aufgebracht wird. Diese kann bevorzugt aus wasserverdünnbaren Überzugsmitteln hergestellt werden. Auf diese erste Schicht wird eine farbige Basislackschicht mit dem erfindungsgemäßen Überzugsmittel aufgetragen. Diese Basislackschicht wird entweder in dar Wärme getrocknet oder es kann naß-in-naß, gegebenenfalls nach kurzem Ablüften, weitergearbeitet werden. Auf diese Schicht wird eine Klarlackschicht aufgetragen. Als Klarlack sind grundsätzlich alle bekannten nicht oder transparent pigmentierten Überzugsmittel geeignet. Hierbei können sowohl konventionelle lösungsmittelhaltige, 1- oder 2-Komponenten-Lacke, wasserverdünnbare 1- oder 2-Komponenten-Klarlacke, Pulverklarlacke oder durch Strahlung härtbare Lacke eingesetzt werden. Basislack- und Klarlackschicht werden bevorzugt naß-in-naß appliziert. Nach dem Auftragen werden die Klarlackschicht und gegebenenfalls die Basislackschicht bevorzugt in der Wärme getrocknet. Die Trocknungsbedingungen der Decklackschicht (Basislack und Klarlack) richten sich nach dem verwendeten Klarlacksystem. Sie können beispielsweise bei 20 bis 150°C liegen. Für Reparaturzwecke sind beispielsweise Temperaturen von 20 bis 80°C bevorzugt. Für Zwecke der Serienlackierung sind Temperaturen über 100°C, beispielsweise über 110°C bevorzugt.

Die Erfindung betrifft weiterhin ein Substrat, beschichtet mit einem Mehrschichtüberzug, der erhalten worden ist durch Aufbringen mindestens einer Grundierungsschicht, bevorzugt auf Basis eines wasserverdünnbaren Überzugsmittels, Aufbringen einer farbgebenden Basislackschicht mit einem erfindungsgemäßen Überzugsmittel, gegebenenfalls Trocknen der Basisschicht und Aufbringung eines transparenten Überzugsmittels als Deckschicht und anschließende Erhitzung des beschichteten Substrats. Es können zu dieser Mehrschichtlackierung gegebenenfalls weitere zusätzliche Schichten hinzugefügt werden.

Die erfindungsgemäße Mehrschichtlackierung weist eine gute Oberfläche auf. Die Haftung zwischen den Schichten und der Basislackschicht ist gut und zeigt auch bei Belastung im Feuchtraumklima keine Enthaftungsstörungen. Die Erfindung eignet sich besonders zur Verwendung in der Automobillackierung (Serien- und Reparaturlackierung).

Als Substrate sind Metall- und Kunststoffsubstrate geeignet. Besonders sind die in der Automobilindustrie bekannten Substrate geeignet, z.B. Eisen, Zink, Aluminium, Magnesium oder Legierungen davon, sowic Polyurethane, Polycarbonate oder Polyolefine. Diese können gegebenenfalls mit Grundierungen beschichtet sein. Die erfindungsgemäßen Überzugsmittel sind jedoch auch hervorragend geeignet zur Lackierung anderer Substrate, insbesondere mineralischer Substrate, wie Beton, Holz, sowie zur Beschichtung von Folien (Kunststoff- und Papierfolien) und zum Herstellen dünner Schichten zum Verkleben von mehreren Substraten.

Die folgenden Beispiele erläutern die Erfindung.

Teile beziehen sich auf das Gewicht.

Herstellung der Komponente A

Herstellungsbeispiel 1

In einem Reaktionsgefäß mit Rührer, Innenthermometer, Heizung und Rückflußkühler werden 250 g eines linearen Polyesters (aufgebaut aus Adipinsäure, Isophthalsäure, Hexandiol, OH-Zahl 77, Säurezahl 1,0) mit 80 g Methylethylketon und 53,3 g N-Methylpyrrolidon auf 70°C erwärmt ung bei dieser Temperatur 74 g hydriertes Bisphenol A sowie 28,3 g Dimethylolpropionsäure zugesetzt. Der Ansatz wird auf 120°C erwärmt und eine halbe Stunde bei dieser Temperatur gerührt. Anschließend werden bei 70°C 146,7 g Hexamethylendiisocyanat zugesetzt. Nach einer exothermen Phase (Temperatur <90°C) wird der Ansatz so lange bei 75°C gehalten, bis die Restisocyanatzahlwerte kleiner als 1,8 sind. Die warme Harzmischung wird mit der stöchiometrischen Menge entionisiertem Wasser und 23,5 g Triethylamin unter starkem Rühren umgesetzt, bis kein NCO mehr nachweisbar ist. Es wird mit so viel Wasser verdünnt, daß eine dünnflüssige Dispersion entsteht. Das Methylethylketon wurde im Vakuum abdestilliert.

Es resultierte eine durchscheinende wäßrige Dispersion mit folgenden Kenndaten:

| | |
|---|---|
| Feststoffgehalt : | 30 % |
| Säurezahl : | 27 (mg KOH pro g Festharz) |

Herstellungsbeispiel 2

Aus den nachfolgenden Materialien wird eine acetonische Lösung eines NCO-Prepolymeren hergestellt:

| | |
|---|---|
| 850 | Teile eines Polyesters aus Adipinsäure sowie Hexandiol und Neopentylglykol (Molverhältnis 65:35) mit einer Hydroxylzahl von 56 |
| 67,5 | Teile n-Butanol-gestarteter Polyether der OH-Zahl 26 unter Verwendung eines Gemisches aus 83 % Ethylenoxid und 17 % Propylenoxid |
| 40,2 | Teile Dimethylolpropionsäure |
| 151,2 | Teile Hexamethylendiisocyanat |
| 199,8 | Teile Isophorondiisocyanat |
| 23,4 | Teile Butandiol-1,4 |

Nach Erhalt von etwa 5% NCO wird mit 150% der stöchiometrischen Menge Wasser umgesetzt und gehalten, bis die NCO-Zahl nahezu 0 ist. Nach dem Neutralisieren mit 17,8 Teilen N,N-Dimethyldiethanolamin wird mit soviel Wasser verdünnt, daß die Dispersion fließfähig ist, und das Aceton wird unter Vakuum abdestilliert.
Die entstandene Dispersion enthält 35,2 % Festkörper; Säurezahl 13 mgKOH pro g Festharz.

Herstellungsbeispiel 3

In einem Reaktionsgefäß mit Rührer, Innenthermometer, Heizung und Rückflußkühler werden 1005 g eines linearen Polyesters (aufgebaut aus Adipinsäure, Isophthalsäure und Hexandiol mit einer OH-Zahl von 102) auf 90°C erwärmt und bei dieser Temperatur 1,8 g Trimethylolpropan sowie 393 g Isophorondiisocyanat zugesetzt. Diese Temperatur wird gehalten bis die NCO-Zahl 3,8 beträgt. Nach Abkühlen auf 60°C werden eine Lösung aus 35,3 g Dimethylolpropionsäure, 26,1 g Triethylamin und 250 g N-Methylpyrrolidon zugegeben. Nach Erwärmen auf 80°C wird gehalten, bis eine NCO-Zahl von 1,5 erreicht ist. Es wird mit der molaren Menge entionisiertem Wasser gemischt und die Lösung wird bei 80°C gehalten, bis kein NCO mehr nachweisbar ist. Anschließend wird mit soviel Wasser verdünnt, bis eine flüssige Dispersion entsteht.

| | |
|---|---|
| Feststoffgehalt : | 32,0 Gew.-% (30 min 150°C im Umluftofen) |
| Säurezahl : | 15 (mg KOH pro g Festharz) |
| MEQ-Wert : | 20,9 |
| pH-Wert : | 7,7 |
| mittlere Teilchengröße : | 123 nm |

Herstellung der Komponente B

Herstellungsbeispiel 4

a) Herstellung eines carboxyfunktionellen, epoxidgruppenhaltigen Polymeren:
In eine Lösung von 141 g eines Polyesters (OHZ = 88), hergestellt auf der Basis von Phthalsäureanhydrid, Isophthalsäure, Maleinsäureanhydrid, Propanol und Glycerin, wie in der DE-OS 28 11 913 beschrieben, in 70 g Methylethylketon, wurden 100 g eines Anhydridgemisches ($SZ/H_2O$ = 486), hergestellt durch Umsetzung von Trimellithsäureanhydrid mit Propandiol-1,2, bestehend somit aus Trimellithsäureanhydrid und Anhydriden der nachstehenden Formeln I und II

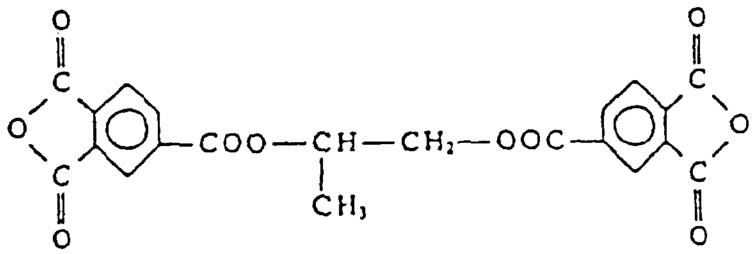

(I)

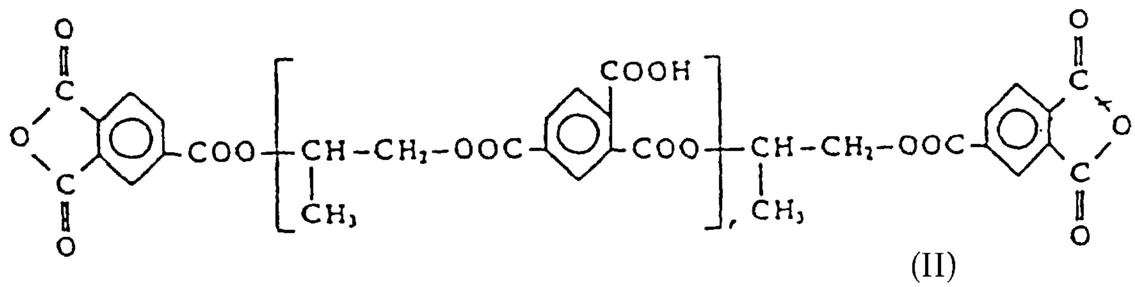

(II)

r = 1-8

die in 108 g Xylol bei 50°C homogenisiert worden waren, innerhalb 1 Stunde zugetropft. Bei 90°C wurde so lange gerührt, bis das Reaktionsgemisch eine Säurezahl von Wasser von 165 (100%iges Harz) erreicht hatte. Danach wurden 12 g Wasser zugemischt und nach 6stündigem Rühren bei 80 bis 90°C eine Säurezahl in Butanol von 168 (100%iges Harz) erreicht. Die Gemischtemperatur wurde auf 60°C gesenkt und nach Zugabe von 0,3 Lithiumbenzoat 132 g eines epoxydierten Leinöls (Epoxidzahl = 8,7) innnerhalb von 2 Stunden zugetropft und die Mischung so lange gerührt, bis die Säurezahl in Butanol auf 86,5 abgesunken war. Anschließend wurde eine Mischung von 42 g Dimethylamin (60%ig in Wasser) in 860 g Wasser eingerührt. Es wurde eine hellgelbe, opaleszierende Lösung erhalten, aus der bei 0,1 bar und 40°C das organische Lösungsmittel abdestilliert wurde. Nach Filtration wurde eine gelbliche, praktisch klare wäßrige Harzlösung erhalten. Festkörpergehalt: 32 % (1 Stunde bei 125°C).

b) Herstellung der Polymerisatdispersion

In einen Reaktor, ausgerüstet mit Rührer, Rückflußkühler, Innenthermometer und Dosiervorrichtung für die Monomeren, sowie den Initiator, wurden 705 g der vorstehenden wäßrigen (32%igen) Dispersion und 196 g Wasser gefüllt. Diese Mischung wurde unter Rühren auf 80°C erwärmt und eine Lösung von 0,5 g Ammoniumperoxydisulfat in 35 g Wasser zugesetzt. 5 Minuten nach der Zugabe des Initiators wurden 35 g einer Monomerenmischung aus 125 g Methylmethacrylat, 94 g n-Butylacrylat und 17 g Glycidylmethacrylat zugesetzt und nach weiteren 15 Minuten Vorpolymerisation wurde die verbliebene Monomermenge über 2 Stunden zudosiert. 10 Minuten nach Beendigung der Zugabe wurden weitere 0,2 g Ammoniumperoxydisulfat, gelöst in 10 g Wasser, innerhalb von 10 Minuten zugesetzt und der Ansatz noch 2 Stunden bei 80°C gerührt, um vollständigen Umsatz zu erzielen. Es resultierte eine stabile wäßrige Dispersion mit ca. 40 % Feststoffgehalt.

Herstellungsbeispiel 5

a) Herstellung eines carboxyfunktionellen, epoxidgruppenhaltigen Polymeren

In eine Lösung von 127 g eines Polyesters (OHZ = 107) in 70 g Methylethylketon wurden 100 g Anhydrid-Gemisch ($SZ/H_2O$ = 560), hergestellt durch Umsetzung von Trimellitsäureanhydrid mit Propandiol-1,2, die in 30 g Aceton bei 50°C homogenisiert waren, innerhalb einer Stunde zugetropft. Bei 90°C wurde so lange gerührt, bis das Reaktionsgemisch eine Säurezahl in Wasser von 197 (bezogen auf 100%iges Harz) erreicht hatte. Danach wurden noch 15 g Wasser zugemischt. Nach 6stündigem Rühren bei 80 bis 90°C betrug die Säurezahl in Butanol 180 (100%iges Harz). Die Gemischtemperatur wurde auf 60°C gesenkt und 133 T eines epoxidierten Leinöls (Epoxyzahl = 8.9) innerhalb von 2 Stunden zugetropft. Die Mischung wurde so lange gerührt, bis die Säurezahl in Butanol auf 90 abgesunken war. Danach wurde eine Mischung von 56 g Dimethylaminoethanol in 540 g Wasser eingerührt. Es wurde eine hellgelbe, opaleszierende Lösung erhalten, aus der bei 0,1 bar und 40°C das organische Lösungsmittel abdestilliert wurde. Nach Filtration wurde eine gelbliche, praktisch klare wäßrige Harzlösung erhalten. Festkörpergehalt (1 h bei 125°C) ca. 39 %.

b) Herstellung der Polymerisationsdispersion

355 g der (39%igen) wäßrigen Dispersion aus 1a) wurden in einem Reaktor, der mit Rührer, Rückflußkühler, Innenthermometer und Dosiervorrichtungen für die Monomeren sowie den Initiator ausgerüstet war, mit 452 g Wasser gemischt, die Mischung unter Rühren auf 80°C erwärmt und eine Lösung von 0,5 T Ammoniumperoxydisulfat in 35 g Wasser zugesetzt. 5 Minuten nach der Zugabe des Initiators wurden 35 g einer Monomerenmischung aus 165 g Methylmethacrylat, 142 g n-Butylacrylat und 24 g Hydroxyethylacrylat zugesetzt und nach weiteren 15 Minuten Vorpolymerisation die verbliebene Monomermenge über 2 Stunden zudosiert. 10 Minuten nach Beendigung der Zugabe wurden weitere 0,2 T Ammoniumperoxydisulfat, gelöst in 10 g Wasser, innerhalb von 10 Minuten zugesetzt und der Ansatz noch 2 Stunden bei 80°C gerührt, um vollständigen Umsatz zu erzielen. Es resultierte eine stabile wäßrige Dispersion mit ca. 40 % Feststoffgehalt.

Herstellungsbeispiel 6

Herstellung eines Pastenharzes

In einem Reaktionsgefäß mit Innenthermometer und Rückflußkühler werden 1395 g eines linearen gesättigten Polyesters (aufgebaut aus Adipinsäure und Hydroxypivalinsäureneopentylglykolester) mit einer OH-Zahl von 112 und einer Viskosität (bei 25°C) von 8.7 Pas unter gutem Rühren mit 161 g Dimethylolpropionsäure und 163 g Trimethylolpropan zum Lösen auf 90°C erwärmt und dann auf 50°C abgekühlt. Nach Zusatz von 865 g Tetramethylxylylen-diisocyanat wird langsam auf 120°C erwärmt, bis der NCO-Gehalt unter 0.2 % liegt. Danach wird mit 861 g Methoxypropanol verdünnt.

| | |
|---|---|
| Festkörper (30 min 150 C) | 75 Gew.-% |
| Säurezahl (bezogen auf Festkörper) | 27 |
| Viskosität bei 25°C, mit Methoxypropanol auf 40 % verdünnt | 210 mPas * |

Auf 1963 g dieser Harzlösung werden ein Gemisch aus 58.3 g Dimethylethanolamin und 58.3 g Wasser schnell zugegeben und auf 80°C erwärmt. Danach langsam mit Wasser verdünnen zu einer trüben, in der Wärme gut verarbeitbaren hochviskosen Paste mit folgenden Kennzahlen:

| | |
|---|---|
| Festkörper (30 min 150°C) | 32.3 Gew.-% |
| Viskosität bei 25°C | 1,3 Pas * |
| MEQ-Wert | 42 |
| pH-Wert | 7,6 |

* gemessen in einem Rotationsviskosimeter mit koaxialer Zylindereinrichtung nach DIN 53 018 und 53 019 nach 5 min. Scheren bei einem Schergefälle von 231 Sek.$^{-1}$.

Herstellung der Komponenten für die folgenden Lackbeispiele

Herstellungsbeispiel 7

Herstellung einer Bindemittellösung

| | |
|---|---|
| 50,00 g | des vorstehend unter Herstellungsbeispiel 4 beschriebenen wasserverdünnbaren Bindemittel werden mit |
| 43,94 g | vollentsalztem Wasser und |
| 6,00 g | Butoxyethanol vermischt und mit |
| 0,06 g | N-Dimethylaminoethanol auf einen pH-Wert von 6,2-6,4 eingestellt. |

Herstellungsbeispiel 8

Herstellung einer Aluminiumanteigung

| | |
|---|---|
| 20,50 g | einer handelsüblichen Aluminiumpaste mit einem Metallgehalt von 65% werden mit einer Mischung aus |
| 7,00 g | Butoxyethanol und |
| 14,00 g | vollentsalztem Wasser gut verrührt und anschließend mit einer Mischung aus |
| 4,00 g | des vorstehend unter Herstellungsbeispiel 4 und zusätzlich |
| 6,00 g | des unter Herstellungsbeispiel 1 beschriebenen Bindemittels, |
| 10,00 g | Butoxyethanol, |
| 34,70 g | vollentsalztem Wasser und |
| 3,00 g | eines handelsüblichen sauren Acrylatverdickers versetzt. Mit einer Mischung aus |
| 0,08 g | N-Dimethylaminoethanol und |
| 0,72 g | vollentsalztem Wasser wird auf einen pH-Wert von 6,2-6,4 eingestellt. |

Herstellungsbeispiel 9

Herstellung einer blauen Pigmentanreibung

Mit Hilfe eines Dissolvers werden

| | |
|---|---|
| 10,00 g | Cu-Phthalocyaninpigment in |
| 17,00 g | eines handelsüblichen Hexamethoxymelaminharzes und |
| 10,00 g | Butoxyethanol vordispergiert und nach Zusatz von weiteren |
| 5,00 g | des Melaminharzes und |
| 10,00 g | Butoxyethanol mit einer Perlmühle ausdispergiert. Danach wird mit einer Mischung aus |
| 0,90 g | eines handelsüblichen sauren Acrylverdickers und |
| 18,91 g | vollentsalztem Wasser versetzt und mit |
| 2,00 g | N-Dimethylaminoethanol und |
| 26,19 g | vollentsalztem Wasser auf pH 7,1-7,3 eingestellt. |

Herstellungsbeispiel 10

Herstellung einer grünen Pigmentanreibung

| | |
|---|---|
| 20,00 g | eines chlorierten Phthalocyaninpigmentes werden mit einem Dissolver in einer Mi-Mischung aus |
| 20,00 g | des vorstehend unter Herstellungsbeispiel 6 beschriebenen Bindemittels, |
| 35,00 g | Butoxyethanol und |
| 0,50 g | N-Dimethylaminoethanol vordispergiert und anschließend auf einer Perlmühle ausdispergiert. Danach wird die Mischung mit |
| 24,50 g | vollentsalztem Wasser verdünnt. |

Herstellungsbeispiel 11

Es wurde gearbeitet, wie im Herstellungsbeispiel 7 beschrieben, jedoch unter Verwendung des unter Herstellungsbeispiel 5 beschriebenen Bindemittels (50,00 g)

Herstellungsbeispiel 12

Es wurde gearbeitet, wie im Herstellungsbeispiel 8 beschrieben, jedoch unter Verwendung des unter Herstellungsbeispiel 5 beschriebenen Bindemittels (4,00 g), zusammen mit dem unter Herstellungsbeispiel 1 beschriebenen Bindemittel (6,0g).

Beispiele für Lackformulierungen

Beispiel 1

1.1. Herstellung eines wasserverdünnbaren, blauen Metallicbasislackes

| | |
|---|---|
| 30,00 g | der in Herstellungsbeispiel 7 beschriebenen Bindemittellösung werden mit |

| | |
|---|---|
| 19,00 g | der in Herstellungsbeispiel 8 beschriebenen Aluminiumanteigung, |
| 1,90 g | saurem Acrylat-Verdicker (wie vorstehend verwendet), |
| 8,94 g | vollentsalztem Wasser und |
| 0,26 g | N-Dimethylaminoethanol für eine Dauer von 30 Minuten gerührt. |

In diese Mischung werden

| | |
|---|---|
| 34,00 g | der unter Herstellungsbeispiel 1 beschriebenen Polyurethandispersion eingerührt und die in Herstellungsbeispiel 9 beschriebene Pigmentanreibung wid in einer Menge von |
| 0,94 g | zugesetzt. Anschließend werden unter Rühren |
| 4,00 g | n-Butanol zugegeben und mit |
| 0,96 g | Wasser auf eine Viskosität von 90-95 mPas bei einem Schergefälle von 100 $sec^{-1}$ eingestellt. |

Festkörpergehalt: 18,0 Gew.-% (120 Minuten in einem Umlufttrockenofen bei 120°C).

1.2 Aufbringen des Basislackes und eines Klarlackes

Auf ein in üblicher Weise mit Zn-phosphatierung, Elektrotauchlack und Spritzgrund vorbehandeltes Blech wird der in 1.1 beschriebene Basislack mit einer Druckluft-zerstäubenden Spritzpistole so aufgetragen, daß in zwei Auftragsschritten eine Gesamttrockenfilmstärke von 15 µm erreicht wird. Die Bedingungen bei der Applikation des Basislackes sind 23°C Umgebungstemperatur und 60% relative Luftfeuchtigkeit. Nach der Applikation wird das beschichtete Blech in einem Umlufttrockenofen 5 Minuten bei 50°C forciert getrocknet und nach dem Abkühlen auf 23°C in üblicher Weise mit einem handelsüblichen Acryl-Melaminharz-Klarlack überschichtet und 30 Minuten bei 130°C eingebrannt.

Man erhält so eine gleichmäßige wolkenfreie Beschichtung mit einem ausgezeichneten Metalliceffekt und sehr hohem Glanz.

Beispiel 2

2.1 Herstellung eines wasserverdünnbaren silberfarbenen Metallicbasislackes

Analog zu Beispiel 1.1 wird ein silberfarbener Basislack hergestellt aus

| | |
|---|---|
| 40,00 g | der in Herstellungsbeispiel 11 beschriebenen Bindemittellösung, |
| 19,00 g | der in Herstellungsbeispiel 12 beschriebenen Aluminiumanteigung, |
| 1,90 g | saurem Acrylatverdicker, |
| 0,26 g | N-Dimethylaminoethanol, |
| 25,00 g | Polyurethandispersion (gemäß Herstellungsbeispiel 2) |
| 4,00 g | n-Butanol und |
| 9,84 g | vollentsalztem Wasser. |

Der Festkörpergehalt beträgt 18,0 Gew.-% (120 Minuten im Umlufttrockenofen bei 120°C). Die Viskosität liegt bei 90-95 mPa.s bei einem Schergefälle von 100 $sec^{-1}$.

2.2 Aufbringen des Basislackes und eines Klarlackes

Wie in Beispiel 1.2 beschrieben, wird ein vorbehandeltes Blech mit Basislack beschichtet und 5 Minuten bei 50°C forciert getrocknet. Nach dem Abkühlen wird mit einem handelsüblichen Zweikomponenten-Acryl-Isocyanat-Klarlack überschichtet und 30 Minuten bei 130°C eingebrannt.

Die so erhaltene Beschichtung zeichnet sich durch eine hohe Brillanz, absolut gleichmäßige wolkenfreie Effektausbildung und ausgeprägten Metalliceffekt aus.

Beispiel 3

3.1 Herstellung eines wasserverdünnbaren grünen Metallicbasislackes

Der Basislack wird analog Beispiel 1.1 hergestellt aus

| | |
|---|---|
| 59,00 g | Bindemittellösung nach Herstellungsbeispiel 7, |
| 18,50 g | Aluminiumanteigung nach Herstellungsbeispiel 8, |
| 1,90 g | saurem Acrylatverdicker, |
| 0,26 g | N-Dimethylaminoethanol, |
| 6,00 g | Polyurethandispersion nach Herstellungsbeispiel 3, |
| 0,60 g | der in Herstellungsbeispiel 10 beschriebenen grünen Pigmentanreibung, |
| 4,00 g | n-Butanol und |
| 9,74 g | vollentsalztem Wasser. |

Festkörpergehalt: 17,1 Gew.-% (120 Minuten im Umluftofen bei 120°C).
Viskosität: 90-95 mPas bei einem Schergefälle von 100 $sec^{-1}$.

3.2 Aufbringen des Basislackes und eines Klarlackes

Wie in Beispiel 1.2 beschrieben, wird der Basislack aus 3.1 auf einem vorbehandelten Blech appliziert und nach der forcierten Trocknung mit einem handelsüblichen Acryl-Melamin-Klarlack überschichtet und bei 130°C 30 Minuten eingebrannt. Es resultiert eine grüne Metallicbeschichtung mit gleich gutem Eigenschaftsbild wie in den Beispielen 1.2 und 2.2.

## Patentansprüche

**1.** Wäßriges Überzugsmittel auf der Basis von Polyurethanharz enthaltendem Bindemittel, dadurch gekennzeichnet, daß es als Bindemittel

I) 60 bis 100 Gew.-% eines Gemisches aus

A) 5-95 Gew.-% eines oder mehrerer selbstemulgierender Polyurethanharze in wäßriger Dispersion, mit einem Zahlenmittel der Molmasse (Mn) von 3000 bis 300000 und mit Carboxylgruppen entsprechend einer Säurezahl von 5 bis 50, erhältlich aus einem wasserdispergierbaren Polyurethanprepolymeren mit mehr als einer freien Isocyanatgruppe pro Molekül, durch Kettenverlängerung mit Wasser und

B) 95 bis 5 Gew.-% eines oder mehrerer acrylierter Polyester und/oder acrylierter Polyurethane, mit einer Säurezahl von 5 bis 50, in wäßriger Dispersion, sowie

II) 0 bis 40 Gew.-% eines oder mehrerer Formaldehyd-Kondensationsharze und/oder blockierter Polyisocyanate,

enthält, wobei sich die Gew.-% jeweils auf den Harzfestkörper beziehen.

**2.** Wäßriges Überzugsmittel nach Anspruch 1, dadurch gekennzeichnet, daß die Bindemittelkomponente A) erhältlich ist durch Herstellung des Polyurethanprepolymeren durch Umsetzung von

a) einem oder mehreren Polyisocyanaten,

b) einem oder mehreren Polyetherdiolen und/oder Polyesterdiolen, jeweils mit einer zahlenmittleren Molmasse von 500 bis 5000, die bis zu 30 Gew.-% durch eine oder mehrere niedrigmolekulare Polyhydroxylverbindungen mit einer Molmasse von 60 bis 400 ersetzt sein können, und

c) einem oder mehreren anionische Gruppen enthaltenden Dihydroxy-, Diamino- und/oder Hydroxyaminoalkanen in einem NCO/OH-Äquivalentverhältnis von 1,0-2,0:1, bevorzugt von 1,1-1,9:1, und anschließende Kettenverlängerung des Polyurethanprepolymeren mit Wasser.

**3.** Wäßriges Überzugsmittel nach Anspruch 2, dadurch gekennzeichnet, daß die anschließende Kettenverlängerung des Polyurethanprepolymeren mit Wasser, in organischer Phase, im Verhältnis von 2 freien Isocyanatgruppen zu 0,5 bis 5 Mol Wasser erfolgt.

**4.** Wäßriges Überzugsmittel nach einem der Ansprüche 1 bis 3, dadurch gekennzeichnet, daß als Formaldehyd-Kondensationsharze der Komponente II) ein oder mehrere vollveretherte Amin-Formaldehyd-Kondensationsharze enthalten sind.

**5.** Verfahren zur Herstellung eines Bindemittels für wäßrige Überzugsmittel, durch Umsetzung von

a) einem oder mehreren Polyisocyanaten,

b) einem oder mehreren Polyetherdiolen und/oder Polyesterdiolen,jeweils mit einer zahlenmittleren Molmasse von 500 bis 5000, die bis zu 30 Gew.-% durch eine oder mehrere niedrige molekulare Polyhydroxylverbindungen mit einer Molmasse von 60 bis 400 ersetzt sein können, und

c) einer oder mehreren Dimethylolalkancarbonsäuren, in einem NCO/OH-Äquivalentverhältnis von 1,0 bis 2,0 : 1, bevorzugt von 1,1 bis 1,9 : 1, und anschließende Kettenverlängerung des Polyurethanprepolymeren mit Wasser.

**6.** Verfahren nach Anspruch 5, dadurch gekennzeichnet, daß die Kettenverlängerung des Polyurethanprepolymeren mit Wasser, in organischer Phase, im Verhältnis von 2 freien Isocyanatgruppen zu 0,5 bis 3,0 Mol Wasser erfolgt.

**7.** Verfahren zur Herstellung von wäßrigen Überzugsmitteln, dadurch gekennzeichnet, daß man

I) 60 bis 100 Gew.-% eines Gemisches aus

A) 5 - 95 Gew.-% eines oder mehrerer der nach den Ansprüchen 5 und 6 erhaltenen Polyurethanharze mit

B) 95 - 5 Gew.-% eines oder mehrerer acrylierter Polyester und/oder acrylierter Polyurethane, mit einer Säurezahl von 5 bis 50, in wäßriger Dispersion, sowie mit

II) 0 bis 40 Gew.-% eines oder mehrerer Formaldehyd-Kondensationsharze und/oder blockierter Polyisocyanate

vermischt, wobei sich die Gew.-% jeweils auf den Harzfestkörper beziehen.

**8.** Verfahren zur Herstellung von Mehrschichtlackierungen, durch Auftrag einer Basislackschicht oder Decklackschicht auf ein gegebenenfalls mit einer oder mehreren Grundierungen und/oder Zwischenschichten versehenes Substrat, gegebenenfalls Antrocknen der Basislackschicht und Überlackieren mit einer Klarlackschicht, worauf eine Härtung erfolgt, dadurch gekennzeichnet, daß zur Herstellung der Basislackschicht oder Decklackschicht ein wäßriges Überzugsmittel gemäß einem der Ansprüche 1 bis 5 verwendet wird.

**9.** Verwendung der wäßrigen Überzugsmittel gemäß einem der Ansprüche 1 bis 5 zur Herstellung von Basislackschichten oder Decklackschichten in Mehrschichtlackierungen.

**10.** Verwendung der wäßrigen Überzugsmittel nach einem der Ansprüche 1 bis 5 bei der Lackierung von Kraftfahrzeugen oder Kraftfahrzeugteilen.

**Claims**

**1.** An aqueous coating medium based on a binder vehicle containing polyurethane resin, characterised in that it contains, as the binder vehicle,

I) 60 to 100 % by weight of a mixture comprising

A) 5-95 % by weight of one or more self-emulsifying polyurethane resins in aqueous dispersion, with a number average molecular weight (Mn) of 3000 to 300,000 and containing carboxyl groups corresponding to an acid number of 5 to 50, obtainable from a water-dispersible polyurethane prepolymer, containing more than one free isocyanate group per molecule, by chain extension with water, and

B) 95 to 5 % by weight of one or more acrylated polyesters and/or acrylated polyurethanes, with an acid number of 5 to 50, in aqueous dispersion as well as

II) 0 to 40 % by weight of one or more formaldehyde condensation resins and/or blocked polyisocyanates,

wherein the percentages by weight each relate to the resin solids.

**2.** An aqueous coating medium according to claim 1, characterised in that the binder vehicle component A) can be obtained by preparing the prepolymer by the reaction of

a) one or more polyisocyanates,

b) one or more polyether diols and/or polyester diols, each with a number average molecular weight of 500 to 5000, up to 30 % by weight of which may be replaced by one or more low molecular weight polyhydroxyl compounds with a molecular weight of 60 to 400, and

c) one or more dihydroxy-, diamino- and/or hydroxyamino alkanes containing one or more anionic groups

in an NCO/OH equivalent ratio of 1.0-2.0:1, preferably 1.1-1.9:1, and subsequent chain extension of the polyurethane prepolymer with water.

**3.** An aqueous coating medium according to claim 2, characterised in that the subsequent chain extension with water of the polyurethane prepolymer is effected in an organic phase at a ratio of 2 free isocyanate groups to 0.5 to 5 mole water.

**4.** An aqueous coating medium according to any one of claims 1 to 3, characterised in that one or more completely etherified amine-formaldehyde condensation resins are contained as the formaldehyde condensation resins of component II).

**5.** A process for producing a binder vehicle for aqueous coating media by the reaction of

a) one or more polyisocyanates,

b) one or more polyether diols and/or polyester diols, each with a number average molecular weight of 500 to 5000, up to 30 % by weight of which may be replaced by one or more low molecular weight polyhydroxyl compounds with a molecular weight of 60 to 400, and

c) one or more dimethylolalkane carboxylic acids. at an NCO/OH equivalent ratio of 1.0 to 2.0 : 1, preferably 1.1 to 1.9 : 1, and subsequent chain extension of the polyurethane prepolymer with water.

**6.** A process according to claim 5, characterised in that the chain extension of the polyurethane prepolymer with water is effected in an organic phase, at a ratio of 2 free isocyanate groups to 0.5 to 3.0 moles water.

**7.** A process for producing aqueous coating media, characterised in that

I) 60 to 100 % by weight of a mixture comprising

A) 5 - 95 % by weight of one or more polyurethane resins obtained according to claims 5 and 6 is mixed with

B) 95 - 5 % by weight of one or more acrylated polyesters and/or acrylated polyurethanes with an acid number of 5 to 50, in aqueous dispersion, and with

II) 0 to 40 % by weight of one or more formaldehyde condensation resins and/or blocked polyisocyanates,

wherein the percentages by weight each relate to the resin solids.

**8.** A process for producing multilayer coatings by the application of a base lacquer coat or covering lacquer coat to a substrate which is optionally provided with one or more primer coats and/or intermediate coats, optionally drying the base lacquer coat and overpainting with a clear lacquer coat, whereupon hardening is effected, characterised in that an aqueous coating medium according to any one of claims 1 to 5 is used to produce the base lacquer coat or covering lacquer coat.

**9.** The use of the aqueous coating media according to any one of claims 1 to 5 for producing base lacquer coats or covering lacquer coats in multilayer coatings.

**10.** The use of the aqueous coating medium according to any one of claims 1 to 5 in the coating of motor vehicles or motor vehicle parts.

**Revendications**

**1.** Produit de revêtement aqueux à base de liant contenant une résine polyuréthane, caractérisé en ce qu'il contient comme liant

I. de 60 à 100% en poids d'un mélange de

A) 5 - 95% en poids d'une ou plusieurs résines polyuréthane auto-émulsifiantes en dispersion aqueuse, avec une masse molaire moyenne en nombre (Mn) de 3 000 à 300 000, que l'on peut obtenir à partir d'un prépolymère de polyuréthane dispersable à l'eau avec des groupes carboxyles correspondant à un indice d'acide de 5 à 50, et avec plus d'un groupe isocyanate libre par molécule, par allongement de chaîne avec de l'eau, et
B) 95 à 5% en poids d'un ou plusieurs polyesters acrylés et/ou polyuréthanes acrylés, avec un indice d'acide de 5 à 50, en dispersion aqueuse, ainsi que

II. De 0 à 40% en poids d'une ou plusieurs résines de condensation amine-formaldéhyde et/ou polyisocyanates bloquées,

les pourcentages pondéraux se rapportant toujours à la résine solide.

**2.** Produit de revêtement aqueux selon la revendication 1, caractérisé en ce que le composant de liant A) peut s'obtenir par préparation des prépolymères de polyuréthane par réaction de

a) un ou plusieurs polyisocyanates,
b) un ou plusieurs polyétherdiols et/ou polyesterdiols, avec à chaque fois une masse molaire moyenne en nombre de 500 à 5 000, que l'on peut remplacer jusqu'à 30% en poids par un ou plusieurs composés polyhydroxyles à faible poids moléculaire ayant une masse molaire de 60 à 400, et
c) des dihydroxy-, diamino, et/ou hydroxyaminoalcanes contenant un ou plusieurs groupes anioniques,

dans un rapport d'équivalent NCO/OH de 1,0 - 2,0:1, de préférence de 1,1 - 1,9:1, puis allongement de chaîne du prépolymère de polyuréthane avec de l'eau.

**3.** Produit de revêtement aqueux selon la revendication 2, caractérisé en ce que l'allongement de la chaîne du prépolymère de polyuréthane auquel on procède ultérieurement avec de l'eau s'effectue en phase organique dans un rapport de deux groupes isocyanate libres pour 0,5 à 5 moles d'eau.

**4.** Produit de revêtement aqueux selon l'une des revendications 1 à 3, caractérisé en ce que comme résines de condensation de formaldéhyde du composant II) on trouve une ou plusieurs résines de condensation amine-formaldéhyde entièrement éthérifiées.

**5.** Procédé de préparation d'un liant pour revêtements aqueux, par réaction de

a) un ou plusieurs polyisocyanates,
b) un ou plusieurs polyétherdiols et/ou polyesterdiols, à chaque fois avec ùne masse molaire moyenne en nombre de 500 à 5 000, qui peut être remplacé jusqu'à 30% en poids par un ou plusieurs composés polyhydroxyles à faible poids moléculaire avec une masse molaire de 60 à 400, et
c) un ou plusieurs acides diméthylolalcanecarboxyliques, dans un rapport d'équivalent NCO/OH de 1,0 à 2,0:1, de préférence de 1,1 à 1,9:1, puis allongement de chaîne du prépolymère de polyuréthane avec de l'eau.

**6.** Procédé selon la revendication 5, caractérisé en ce que l'allongement de chaîne du prépolymère de polyuréthane s'effectue avec de l'eau, en phase organique, dans un rapport de deux groupes isocyanates libres pour 0,5 à 3,0 mol d'eau.

**7.** Procédé de préparation de produits de revêtement aqueux, caractérisé en ce qu'on mélange

I) 60 à 100% en poids d'un mélange de

A) 5 - 95% en poids d'une ou plusieurs résines de polyuréthane obtenues selon les revendications 5 et 6, avec
B) 95 - 5% en poids d'un ou plusieurs polyesters acrylés et/ou polyuréthanes acrylés, avec un indice d'acide de 5 à 50, en dispersion aqueuse, ainsi qu'avec

II 0 à 40% en poids d'une ou plusieurs résines de condensation de formaldéhyde et/ou polyisocyanates bloquées,

les pourcentages pondéraux se rapportant toujours à la résine solide.

**8.** Procédé de préparation de vernis à plusieurs couches, par dépôt d'une couche de vernis de base ou d'une couche de vernis de revêtement sur un substrat éventuellement muni d'un ou plusieurs apprêts et/ou d'une ou plusieurs couches intermédiaires, puis le cas échéant par séchage de la couche de vernis de base et des revêtements avec une couche de vernis clair, ceci produisant un durcissement, caractérisé en ce que pour préparer la couche de vernis de base ou la couche de vernis de revêtement, on utilise un produit de revêtement aqueux selon l'une des revendications 1 à 5.

**9.** Application des produits de revêtement aqueux selon l'une des revendications 1 à 5 à la préparation de couches de vernis de base ou de couches de vernis de recouvrement dans des vernissages à plusieurs couches.

**10.** Application du produit de revêtement aqueux selon l'une des revendications 1 à 5 au vernissage des automobiles ou des pièces d'automobiles.